# EUROPÄISCHE PATENTSCHRIFT

(11) **EP 3 282 092 B1**
(45) Veröffentlichungstag und Bekanntmachung des Hinweises auf die Patenterteilung: **12.12.2018**
(21) Anmeldenummer: 17183952.5
(22) Anmeldetag: 31.07.2017
(51) Int. Cl.: B64D 29/06, F01D 9/02, F01D 25/28, F02K 1/52, F02C 7/04, F02K 3/06, F01D 9/06

(54) **Turbofan-Triebwerk mit einer im Sekundärstromkanal liegenden und ein separates Abschlusselement aufweisenden Verkleidung**
Turbofan engine with cladding having a separate closing element and lying in the secondary flow channel
Turbine à double flux comprenant un habillage présentant un élément de raccord séparé et se trouvant dand un canal d'écoulement secondaire

(30) Priorität: 11.08.2016 DE 102016215030
(43) Veröffentlichungstag der Anmeldung: 14.02.2018
(73) Patentinhaber: Rolls-Royce Deutschland Ltd & Co KG, 15827 Blankenfelde-Mahlow (DE)
(72) Erfinder: THIES, Robert, 14548 Schwielowsee (DE)
(74) Vertreter: Maikowski & Ninnemann Patentanwälte Partnerschaft mbB

(56) Entgegenhaltungen:
- WO-A2-2014/018137
- FR-A1- 2 996 070
- JP-A- 2002 188 513
- US-A- 4 993 918
- US-A1- 2005 132 715
- US-A1- 2005 247 042

## Beschreibung

Die Erfindung betrifft ein Turbofan-Triebwerk gemäß dem Oberbegriff des Anspruchs 1.

Turbofan-Triebwerke werden auch als Mantelstrom- oder Nebenstromtriebwerke bezeichnet. Sie zeichnen sich dadurch aus, dass der Fan (auch als Bläser bezeichnet) von einer hinter der Brennkammer des Turbofan-Triebwerks angeordneten Turbine angetrieben wird, wobei ein großer Anteil der von dem Triebwerk angesaugten Luftmasse an einem die Brennkammer aufweisenden Kerntriebwerk vorbei beschleunigt wird. Das Turbofan-Triebwerk bildet dabei einen Primärstromkanal durch das Kerntriebwerk sowie einen Sekundärstromkanal für einen äußeren Fluidstrom, der an dem Kerntriebwerk vorbei geführt wird.

Innerhalb des Turbofan-Triebwerks und insbesondere durch den Sekundärstromkanal sind unterschiedliche Komponenten, wie Leitungen, Streben oder verstellbare Koppelelemente, verlegt. Diese müssen teilweise durch den Sekundärstromkanal radial nach außen geführt werden. In entsprechenden Leitungen ist beispielsweise Luft oder Öl geführt oder es handelt sich um Strom- oder Signalleitungen. Verstellbare und radial durch den Sekundärstromkanal geführte Koppelelemente dienen beispielsweise der mechanischen Kopplung und dem Antrieb von Systemen, die zur besseren Kühlung radial außen bezüglich des Kerntriebwerks in einem Triebwerksgehäuse untergebracht sind, wie z.B. eines Zusatzgetriebes, einer Kraftstoffpumpe, einer Ölpumpe oder eines Generators. Um dabei die jeweiligen Komponenten vor äußeren Einflüssen geschützt und aerodynamisch weniger störend durch den Sekundärstromkanal führen zu können, ist üblicherweise eine Verkleidung (englisch "splitter fairing") vorgesehen, durch die die jeweiligen Komponenten innerhalb des Sekundärstromkanals verkleidet sind, so dass ein in dem Strömungskanal strömendes Fluid aerodynamisch möglichst günstig an den Komponenten vorbeigeführt wird. Diese Verkleidung ist in dem Sekundärstromkanal angeordnet und erstreckt sich bezogen auf eine Mittelachse des Turbofan-Triebwerks insbesondere in radialer Richtung in dem Sekundärstromkanal.

Die Verkleidung weist für die gezielte Führung des Fluidstroms um die Verkleidung herum ein Abschlusselement auf, das einen dem Fluidstrom zugewandten Nasenleistenabschnitt (englisch "leading edge section") und/oder einen in Strömungsrichtung des Fluidstroms liegenden Endleistenabschnitt (englisch "trailing edge section") auf. In der Praxis handelt es sich bei derartigen Verkleidungen um strukturell vergleichsweise einfach gestaltete Bauteile, die üblicherweise an einer radial innen liegenden und/oder radial außen liegenden Wandung des Sekundärstromkanals fixiert sind. So zeigt beispielsweise auch die US 2014/0060079 A1 eine Verkleidung für eine radial in einem Sekundärstromkanal geführte Welle, die einen halbkreisförmigen Querschnitt aufweist und hinter der - bezogen auf die Strömungsrichtung des Fluidstroms in dem Sekundärstromkanal - die zu einer Getriebeeinheit führende Welle verläuft. Die damit ein Abschlusselement mit einem Nasenleistenabschnitt integrierende Verkleidung ist dabei in eine Halterungsöffnung an einer äußeren Wandung des Sekundärstromkanals eingeschoben und über mehrere Bolzen fixiert.

Auch aus der US 2014/0140820 A1 geht eine vergleichbare Verkleidung mit einem hieran integral ausgebildeten Abschlusselement für die Verkleidung von durch einen Sekundärstromkanal geführten Leitungen hervor. Die hierin gezeigte Verkleidung ist dabei sowohl an einer radial innen liegenden als auch an einer radial außen liegenden Wandung des Sekundärstromkanals formschlüssig fixiert.

Die in der US 2014/0060079 A1 und der US 2014/0140820 A1 offenbarten Verkleidungen wie auch die in der Praxis eingesetzten Verkleidungen für die Anordnung in einem Sekundärstromkanal sind jedoch mit Blick auf eine Wartung oder Reparatur des Turbofan-Triebwerks vergleichsweise nachteilig, da hierüber die Zugänglichkeit zu innerhalb und/oder unter- oder oberhalb der Verkleidung liegenden Komponenten deutlich erschwert ist. Im Übrigen muss stets ein Kompromiss gefunden werden, sofern innerhalb einer hohlzylindrischen Verkleidung beispielsweise Fluidleitungen geführt werden sollen und damit die Verkleidung mit Blick auf ein mögliches Bersten einer Leitung für eventuell entstehende hohe Drücke, aggressive Flüssigkeiten oder Gase und/oder feuerbeständig ausgelegt sein muss, gleichzeitig aber die Verkleidung ein aerodynamisch günstiges Design aufweisen soll.

Der Erfindung liegt daher die Aufgabe zugrunde, ein in dieser Hinsicht verbessertes Turbofan-Triebwerk mit einer in einem Sekundärstromkanal angeordneten Verkleidung bereitzustellen.

Diese Aufgabe wird mit einem Turbofan-Triebwerk des Anspruchs 1 gelöst.

Hiernach ist erfindungsgemäß vorgesehen, dass die in dem Sekundärstromkanal (auch Bypasskanal genannt) angeordnete und von dem Fluidstrom im Betrieb des Turbofan-Triebwerks umströmte Verkleidung wenigstens zweiteilig ausgeführt ist und neben einem die mindestens eine in dem Sekundärstromkanal radial verlaufende Komponente aufnehmenden Aufnahmekörper ein als separates Bauteil ausgeführtes Abschlusselement mit einem Nasenleisten- und/oder Endleistenabschnitt aufweist. Der Aufnahmekörper, der insbesondere für die Verkleidung Fluid führender Leitungen z.B. als hohlzylindrischen Druckkörper ausgeführt sein kann, kann somit aus einem anderen Material hergestellt sein als das den Nasenleisten- und/oder Endleistenabschnitt ausbildende Abschlusselement, das vornehmlich mit Blick auf eine möglichst aerodynamisch günstige Geometrie ausgestaltet. So kann das separate Abschlusselement aus einem weniger steifen und leichteren Material hergestellt sein als der Aufnahmekörper, der in einem Versagensfall, bei dem eine durch die Verkleidung zumindest teilweise verkleidete Komponente versagt, vergleichsweise hohe Kräfte absorbieren können soll. Durch die lösbare Befestigung des Abschlusselements an dem Aufnahmekörper ist zudem erreicht, dass sowohl die Montage als auch die Demontage der Verkleidung vereinfacht werden kann und die im Bereich der Verkleidung oder innerhalb des Aufnahmekörpers geführten Komponenten erheblich leichter zugänglich sind.

Beispielsweise weist das Abschlusselement mit Blick auf eine aerodynamisch günstige Geometrie einen V-förmigen oder dreiecksförmigen Querschnitt auf, bei dem sich von einer Nasenleiste oder Endleiste zwei mit dem Aufnahmekörper verbundene Seitenflächen schenkelartig weg erstrecken. Über ein derartiges Abschlusselement wird somit eine Fluidströmung ausgehend von der Nasenleiste an dem Abschlusselement und der Verkleidung entlang geführt. Über einen sich entsprechend verjüngenden Endleistenabschnitt des Abschlusselements wird analog die durch die Verkleidung geteilte Fluidströmung am Ende der Verkleidung wieder zusammengeführt.

Der Fan, das Kerntriebwerk und ein Auslass des Turbofan-Triebwerks sind typischerweise entlang einer Mittelachse des Triebwerks hintereinander angeordnet. In einer Ausführungsvariante ist nun das Abschlusselement entlang einer axialen Richtung bezüglich dieser Mittelachse an dem Aufnahmekörper bestimmungsgemäß anbringbar. Das Abschlusselement ist folglich nicht von oben oder unten an dem Aufnahmekörper anbringbar, sondern ist bestimmungsgemäß entlang an einer Anbringungsrichtung an dem Aufnahmekörper innerhalb des Sekundärstromkanals anbringbar, die im Wesentlichen parallel zur Mittelachse des Turbofan-Triebwerks verläuft.

Erfindungsgemäß ist das Abschlusselement ferner an den Aufnahmekörper steckbar. Um dabei die Montage und Demontage weiter zu vereinfachen ist ein an den Aufnahmekörper gestecktes Abschlusselement über einen selbsttätig wirkenden Verriegelungsmechanismus an dem Aufnahmekörper werkzeuglos gesichert. Das Abschlusselement wird folglich zunächst einfach an den Aufnahmekörper entlang einer Anbringungsrichtung gesteckt und ist hieran dann automatisch über den selbsttätig wirkenden Verriegelungsmechanismus gehalten, ohne dass hierfür ein Werkzeug genutzt werden und beispielsweise zusätzliche Befestigungselemente, wie Schrauben, Bolzen oder Niete, angebracht werden müssten. Das lösbar an dem Aufnahmekörper anzubringende Abschlusselement mit dem Nasenleisten- und/oder Endleistenabschnitt (mithin also gegebenenfalls einer dem Fluidstrom zugewandten Vorderkante oder einer in Strömungsrichtung des Fluidstroms liegenden Hinterkante) kann somit an dem Aufnahmekörper durch einfaches Anstecken in einer vorgegebenen Endlage arretiert werden.

In dieser Endlage können zusätzliche Befestigungselemente zur endgültigen Fixierung des Abschlusselements an dem Aufnahmekörper angebracht werden. Es ist jedoch auch ohne derartige Befestigungselemente über den selbsttätig wirkenden Verriegelungsmechanismus erreicht, dass das Abschlusselement an dem Aufnahmekörper gesichert ist. Werden beispielsweise bei der Montage der Verkleidung Befestigungselemente vergessen, ist das Abschlusselement über den Verriegelungsmechanismus dennoch an dem Aufnahmekörper gehalten und kann sich nicht von diesem ablösen. Ferner verbleibt das Abschlusselement auch nach Entfernen von gegebenenfalls zusätzlich vorgesehenen Befestigungselementen zur Fixierung des Abschlusselements an dem Aufnahmekörper in einer vorgegebenen Position, bis der Verriegelungsmechanismus betätigt und eine entsprechende Verriegelung gelöst wird.

Der Verriegelungsmechanismus kann beispielsweise mindestens ein Verriegelungselement an dem Aufnahmekörper umfassen, welches selbsttätig mit einem Element und/oder Abschnitt des Abschlusselements verriegelt, wenn das Abschlusselement bestimmungsgemäß an den Aufnahmekörper gesteckt ist. Beispielsweise treten hierbei das mindestens eine Verriegelungselement und das Element und/oder der Abschnitt des Abschlusselements selbsttätig miteinander in verriegelnden, formschlüssigen Kontakt, wenn das Abschlusselement bestimmungsgemäß an den Aufnahmekörper gesteckt wird.

In einer Ausführungsvariante ist hierfür vorgesehen, dass das Verriegelungselement des Aufnahmekörpers und/oder das Element des Abschlusselements elastisch ausgebildet und/oder federnd gelagert ist. Beim Aufstecken des Abschlusselements kann sich somit das Verriegelungselement des Aufnahmekörpers und/oder das Element des Abschlusselements zunächst entgegen einer Rückstellkraft elastisch verlagern. Nimmt das Abschlusselement eine bestimmungsgemäße Endlage an dem Aufnahmekörper ein, wird das jeweilige Element unter Wirkung der Rückstellkraft in eine Verriegelungsposition verstellt.

Nach einem Ausführungsbeispiel ist vorgesehen, dass das Verriegelungselement eine elastische Federplatte umfasst, die in einem verriegelten Zustand des Verriegelungsmechanismus mit mindestens einem Verriegelungsabschnitt formschlüssig in einen Sicherungsschlitz eingreift. Der mindestens eine Verriegelungsabschnitt der elastischen Federplatte kann hierbei durch den formschlüssigen Eingriff in den Sicherungsschlitz das Abschlusselement an dem Aufnahmekörper arretieren. Hierfür ist beispielsweise vorgesehen, dass durch den in den Sicherungsschlitz eingreifenden Verriegelungsabschnitt ein den Sicherungsschlitz berandender Abschnitt des Abschlusselements und/oder eines hiermit verbundenen Teils hintergriffen ist. Dabei wird der Verriegelungsabschnitt unter der Federwirkung der elastisch ausgestalteten Federplatte innerhalb des Sicherungsschlitzes selbsttätig in eine Verriegelungsposition gedrückt oder gezogen, in der der Verriegelungsabschnitt den Sicherungsschlitz berandenden Abschnitt hintergreift, wenn das Abschlusselement sein Endlage bezüglich des Aufnahmekörpers einnimmt.

In diesem Zusammenhang kann insbesondere vorgesehen sein, dass der Sicherungsschlitz L-förmig oder Hakenförmig ausgebildet ist. Derart kann ein während des Ansteckens des Abschlusselements an den Aufnahmekörper in dem L-förmigen oder hakenförmigen Sicherungsschlitz geführter Verriegelungsabschnitt bei Erreichen der Endlage des Abschlusselements selbsttätig innerhalb des Sicherungsschlitzes in einen Bereich verlagert werden, in dem ein Abschnitt an dem Abschlusselement von dem Verriegelungselement hintergriffen und eine Arretierung des Abschlusselements an dem Aufnahmekörper bereitgestellt ist.

Hierbei kann auch vorgesehen sein, dass die Federplatte zwei Verriegelungsabschnitte aufweist, die räumlich zueinander beabstandet sind. In einer hierauf basierenden Weiterbildung greift beispielsweise ein erster Verriegelungsabschnitt der Federplatte in einen ersten Sicherungsschlitz eines Halteteils ein, das an einer ersten Seitenfläche des Abschlusselements vorgesehen ist. Ein zweiter Verriegelungsabschnitt der Federplatte greift demgegenüber in einen zweiten Sicherungsschlitz an einer der ersten Seitenfläche gegenüberliegenden zweiten Seitenfläche des Abschlusselementes ein. Derart ist über die einzelne Federplatte eine Arretierung des Abschlusselements an zwei sich gegenüberliegenden Seitenflächen mithilfe zweier jeweils in einen Sicherungsschlitz eingreifende Verriegelungsabschnitte erreicht.

Das Halteteil mit dem ersten Sicherungsschlitz kann hierbei an einer im bestimmungsgemäß verbundenen Zustand von Aufnahmekörper und Abschlusselement nicht zugänglichen Innenseite der ersten Seitenfläche vorgesehen sein, während der zweite Sicherungsschlitz an einer Außenseite der zweite Seitenfläche zugänglich ist. Hierüber ist erreicht, dass die Federplatte nur von einer der Seitenflächen aus über ein Verlagern des zweiten Verriegelungsabschnitts an dem zweiten Sicherungsschlitz verstellt werden kann. Indem die beiden Verriegelungsabschnitte an der Federplatte starr miteinander verbunden sind, wird der eine, erste Verriegelungsabschnitt automatisch mitverstellt, wenn der andere zugängliche, zweite Verriegelungsabschnitt an der zweiten Seitenfläche verstellt wird, beispielsweise um eine Verriegelung über den Verriegelungsmechanismus zu lösen.

In einer anderen Ausführungsvariante ist vorgesehen, dass das Verriegelungselement des Aufnahmekörpers einen verstellbar gelagerten Verriegelungshaken umfasst. Dieser Verriegelungshaken ist in einem bestimmungsgemäß verbundenen Zustand von Aufnahmekörper und Abschlusselement mit einem Steckzapfen des Abschlusselements formschlüssig verriegelt. Hierbei wird folglich das Abschlusselement mit seinem Steckzapfen an den Aufnahmekörper gesteckt, wobei in einer bestimmungsgemäßen Endlage des Abschlusselements an dem Aufnahmekörper der vorzugsweise federnd in eine Verriegelungsposition vorgespannte Verriegelungshaken automatisch an oder in den Steckzapfen einschnappt, um das Abschlusselement an dem Aufnahmekörper zu halten. In einer Ausführungsvariante ist an dem Steckzapfen ein Federelement, beispielsweise in Form einer Druckfeder, gelagert. Über ein solches Federelement wird z.B. eine ausreichend stabile, formschlüssige Verbindung zwischen Abschlusselement und Aufnahmekörper unterstützt. Hierüber kann beispielsweise der in eine Durchgangsöffnung eingesteckte Steckzapfen unter Wirkung der Federkraft in Längsrichtung des Einsteckzapfens gegen einen Verriegelungshaken des Aufnahmekörper gedrückt oder gezogen werden, der in eine umlaufende Rille des Steckzapfens greift, um den Eingriff des Verriegelungshakens in die umlaufende Rille des Steckzapfens zu sichern. Zur Aufbringung der hierfür notwendigen Federkraft stützt sich eine Druckfeder in einer Variante einerseits an einem Rand des Steckzapfens oder einer den Steckzapfen der tragenden Trägerplatte des Abschlusselements und andererseits an einem Träger, an dem der Verriegelungshaken verstellbar gelagert ist, ab.

Der Verriegelungsmechanismus kann manuell betätigbar sein, um eine Verriegelung zur Sicherung des Abschlusselements an dem Aufnahmekörper zu lösen. Erst nach manueller Betätigung des Verriegelungsmechanismus kann folglich das Abschlusselement von dem Aufnahmekörper - gegebenenfalls nach Entfernen zusätzlicher Befestigungselemente für die Fixierung des Abschlusselements an dem Aufnahmekörper - getrennt werden. Z.B. wird hierfür ein Verriegelungselement des Verriegelungsmechanismus oder ein mit dem Verriegelungselement zusammenwirkendes, entsprechend ausgestaltetes Betätigungselement manuell verstellt wird. Das Abschlusselement ist hierbei folglich über einen selbstsichernden Verriegelungsmechanismus an dem Aufnahmekörper gehalten, der manuell betätigt werden kann, um das Abschlusselement von dem Aufnahmekörper entfernen zu können.

In diesem Zusammenhang kann auch vorgesehen sein, dass ein Verriegelungselement des Verriegelungsmechanismus in einem von dem mit dem Aufnahmekörper verbundenen Abschlusselement definierten Innenraum aufgenommen ist. Dieser Innenraum wird von mindestens einer Innenseite einer Seitenfläche des Verriegelungselements berandet, wobei der Verriegelungsmechanismus von einer Außenseite dieser Seitenfläche aus manuell betätigbar ist, um eine Verriegelung zur Sicherung des Abschlusselements an dem Aufnahmekörper zu lösen. Der Verriegelungsmechanismus mit dem innen liegenden Verriegelungselement kann somit problemlos von außen betätigt und gelöst werden.

Alternativ oder ergänzend kann vorgesehen sein, dass das Abschlusselement zwei voneinander abgewandte und über den Nasenleistenabschnitt oder über den Endleistenabschnitt des Abschlusselements miteinander verbundene Seitenflächen aufweist und der Verriegelungsmechanismus an nur genau einer der Seitenflächen betätigbar ist, um eine Verriegelung zu lösen. Hiernach ist folglich der Verriegelungsmechanismus nur von einer Seite des Abschlusselements aus zu betätigen. Derart ist nicht nur eine definierte Demontagereihenfolge leicht vorgebbar, sondern auch erreicht, dass ein Zugang zu dem Abschlusselement von nur einer Seite aus ausreichend ist, um das Abschlusselement von dem Aufnahmekörper der Verkleidung abnehmen zu können.

In einer Ausführungsvariante weist die Verkleidung einen Abstandshalter auf, um zu vermeiden, dass das Abschlusselement bei der Montage oder Demontage der Verkleidung mit gegebenenfalls empfindlichen Komponenten des Turbofan-Triebwerks kollidiert. Beispielsweise sind im Bereich einer inneren oder äußeren Wandung des Sekundärstromkanals elektronische Komponenten oder (Flächen-) Kühler vorgesehen, die bei einem Entfernen des Abschlusselements von dem Aufnahmekörper leicht beschädigt werden können. Der Abstandshalter der Verkleidung ist hierfür an der innen liegenden oder außen liegenden Wandung des Sekundärstromkanals vorgesehen, sodass das Abschlusselement im bestimmungsgemäß mit dem Aufnahmekörper verbundenen Zustand durch den Abstandshalter von der jeweiligen Wanderung beabstandet ist und mit einer Ober- oder Unterseite an dem Abstandshalter anliegt. Der Abstandshalter erstreckt sich hierbei vorzugsweise längs einer Anbringungsrichtung, entlang der das Abschlusselement bestimmungsgemäß an den Aufnahmekörper anbringbar ist. Derart kann das Abschlusselement sowohl bei der Montage als auch Demontage an dem Abstandshalter entlang geführt werden.

Der Abstandshalter gibt dabei durch seine quer zur Anbringungsrichtung gemessene Dicke einen von dem Abschlusselement einzuhaltenden Abstand zu der Wanderung des Sekundärstromkanals vor, an der der Abstandshalter vorgesehen ist. Hierüber ist dann das Risiko reduziert, dass das zu montierende oder abgenommene Abschlusselement mit einer Komponente des Turbofan-Triebwerks kollidiert, das in Verlängerung des Abstandshalters an der jeweiligen Kanalwandung angeordnet ist.

Der Abstandshalter kann beispielsweise stabförmig ausgebildet sein und/oder über wenigstens ein Befestigungselement, wie zum Beispiel einen Bolzen oder eine Schraube, an der jeweiligen Kanalwandung fixiert sein. Alternativ oder ergänzend ist der Abstandshalter integraler Bestandteil des Aufnahmekörpers oder hieran als separates Bauteil der dann wenigstens dreiteiligen Verkleidung fixiert.

In einer Ausführungsvariante ist an dem Aufnahmekörper der Verkleidung, an dem das Abschlusselement angebracht ist, ein in Richtung des Abschlusselements vorstehender Vorsprung vorgesehen. Dieser Vorsprung kann Führungsabschnitte für das Anbringen des Abschlusselements an dem Aufnahmekörper eine körperliche Führung für das Abschlusselement aufweisen, insbesondere ausbilden. Beispielsweise bilden die Führungsabschnitts hierfür jeweils eine geneigt zur Anbringungsrichtung des Abschlusselements verlaufende Schräge aus, über die eine automatische Zentrierung des Abschlusselements bezüglich des Vorsprung bei Anbringung des Abschlusselements erreicht ist.

In einer Ausführungsvariante ist das Abschlusselement entlang einer Anbringungsrichtung an den Aufnahmekörper bestimmungsgemäß anbringbar und an dem Aufnahmekörper ist wenigstens ein Leitmittel vorgesehen ist, mittels dem dem Abschlusselement bei seiner Anbringung an den Aufnahmekörper bezüglich einer quer zur Anbringungsrichtung verlaufenden Achse und/oder bezüglich einer radial zu einer Mittelachse des Turbofan-Triebwerks verlaufenden Achse eine bestimmungsgemäße Endlage vorgegeben wird. Ein entsprechendes Leitmittel stellt somit sicher, dass das Abschlusselement in seiner Endlage in einer bestimmten radialen Position vorliegt, bevor das Abschlusselement an dem Aufnahmekörper fixiert wird.

In einer Weiterbildung ist in Kombination mit den vorstehend genannten Führungsabschnitte vorgesehen, dass mittels der Führungsabschnitte des Aufnahmekörpers dem Abschlusselement bei seiner Anbringung an den Aufnahmekörper bezüglich einer quer zur Anbringungsrichtung verlaufenden ersten Achse eine bestimmungsgemäße Endlage vorgegeben wird und mittels des wenigstens einen Leitmittels des Aufnahmekörpers eine bestimmungsgemäße Endlage bezüglich einer zweiten Achse, die sowohl quer zur Anbringungsrichtung als auch quer zu der ersten Achse verläuft. Über die Führungsabschnitte kann somit bei der Anbringung des Abschlusselementes an den Aufnahmekörper eine Zentrierung zweier sich quer zur Anbringungsrichtung gegenüberliegender Seitenflächen des Abschlusselements erreicht werden, während über das wenigstens eine Leitmittel quer hierzu und in radialer Richtung einer Vorgabe der bestimmungsgemäßen Endlage und mithin eine radiale Positionierung des Abschlusselements erfolgt.

Das Abschlusselement kann wenigstens einen Abschnitt umfassen, der bei der Anbringung des Abschlusselements an dem Aufnahmekörper an wenigstens einem Leitelement des wenigstens einen Leitmittels entlang gleitet. Hierbei kann es sich z.B. um einen Befestigungsblock handeln, der eine Befestigungsstelle für mindestens ein separates Befestigungselement definiert, mittels dem das Abschlusselement an dem Aufnahmekörper fixiert ist.
Nach einer Ausführungsvariante ist vorgesehen, dass an dem Aufnahmekörper wenigstens ein Rastclip vorgesehen ist, an dem ein Abschnitt, insbesondere ein Befestigungsblock des mit dem Aufnahmekörper bestimmungsgemäß verbundenen Abschlusselements formschlüssig und/oder kraftschlüssig gehalten ist. Ein Befestigungsblock des Abschlusselements wird hierbei folglich beispielsweise in den entsprechenden Rastclip des Aufnahmekörpers eingesteckt, an dem der Befestigungsblock - zum Beispiel über wenigstens einen Rasthaken des Rastclips - form- und kraftschlüssig gehalten ist. Der Befestigungsblock des Abschlusselements schnappt somit an dem zugeordneten Rastclip ein, wenn das Abschlusselement bestimmungsgemäß an dem Aufnahmekörper angebracht ist.

In einer Variante sind mehrere (mindestens zwei) räumlich zueinander beabstandete Befestigungsblöcke an dem Abschlusselement vorgesehen, die jeweils in einen von mehreren Rastclips des Aufnahmekörpers einschnappen. Ein Rastclip kann hierbei insbesondere im Bereich eines in Richtung des Abschlusselements vorstehenden Vorsprungs des Aufnahmekörpers vorgesehen sein.

In einem Ausführungsbeispiel ist mit einem Befestigungsblock an dem Abschlusselement eine Befestigungsstelle für mindestens ein separates Befestigungselement definiert, mittels dem das Abschlusselement an dem Aufnahmekörper (zusätzlich) fixiert ist. Beispielsweise ist hierfür an dem Befestigungsblock eine Durchgangsöffnung vorgesehen, durch die hindurch ein Befestigungselement, wie eine Schraube oder ein Bolzen, mit einem Gewindeabschnitt hindurchgeführt und in den Aufnahmekörper eingedreht oder eingesteckt ist, um das Abschlusselement - gegebenenfalls zusätzlich zu einem Verriegelungsmechanismus - an dem Aufnahmekörper zu fixieren.

Um zu vermeiden, dass das Abschlusselement über eine vorgegebene Lage hinaus entlang einer Anbringungsrichtung auf den Aufnahmekörper aufgeschoben werden kann und z.B. die Kanten der Seitenflächen des Abschlusselements an der zusammengebauten Verkleidung über eine Mantelfläche des Aufnahmekörpers vorstehen, weist das Abschlusselement in einer Variante mindestens eine Anschlagelement auf, das eine Endlage des Abschlusselements an dem Aufnahmekörpers vorgibt. Hierbei schlägt das Abschlusselement über das mindestens eine Anschlagelement an dem Aufnahmekörper in Anbringungsrichtung an und verhindert eine weitere Verlagerung des Abschlusselements bezüglich des Aufnahmekörpers in der Anbringungsrichtung.

Ein Anschlagelement kann beispielsweise an einem vorstehend erläuterten Befestigungsblock des Abschlusselements vorgesehen sein, z.B. in Form einer hieran ausgebildeten und parallel zur Anbringungsrichtung vorstehender Anschlagnase.

Die beigefügten Figuren veranschaulichen exemplarisch mögliche Ausführungsvarianten der Erfindung.

Hierbei zeigen:
- Figuren 1A-1B: eine Ausführungsvariante eines erfindungsgemäßen Turbofan-Triebwerks mit ausgeblendeter Kerntriebwerksabdeckung und ausgeblendeter Ummantelung eines Sekundärstromkanals jeweils in perspektivischer Ansicht;
- Figur 2A: ausschnittsweise ein Abschlusselement für eine Hinterkante einer Verkleidung des Turbofan-Triebwerks mit einem Verriegelungsmechanismus, der eine an einem Aufnahmekörper der Verkleidung fixierte Federplatte aufweist;
- Figur 2B: ausschnittsweise die Verkleidung der Figur 2A in der Draufsicht mit an dem Aufnahmekörper über den Verriegelungsmechanismus gesichertem Abschlusselement;
- Figur 3: ausschnittsweise eine Verkleidung gemäß einer weiteren Ausführungsvariante eines erfindungsgemäßen Turbofan-Triebwerks mit einem an einen Aufnahmekörper steckbaren und hieran selbstsichernden Abschlusselement für eine Hinterkante einer Verkleidung und einem längserstreckten Abstandshalter für das Abschlusselement;
- Figur 4: in perspektivischer Ansicht und einzeln das Abschlusselement der Figur 3;
- Figuren 5A-5C: in übereinstimmenden Seitenansichten und jeweils nur ausschnittsweise die Verkleidung der Figur 3 in unterschiedlichen Phasen während der Anbringung des Abschlusselements an den Aufnahmekörper;
- Figur 6A: in Draufsicht ausschnittsweise die Verkleidung mit von dem Aufnahmekörper getrennten Abschlusselement;
- Figur 6B: in Draufsicht ausschnittsweise die Verkleidung mit dem Aufnahmekörper und dem Abschlusselement in bestimmungsgemäß verbundenen Zustand;
- Figur 7: in mit der Figur 6B übereinstimmender Ansicht die Verkleidung unter Hervorhebung eines selbsttätig wirkenden Verriegelungsmechanismus für die Sicherung des Abschlusselements an dem Aufnahmekörper;
- Figur 7A: eine vergrößerte Darstellung des Verriegelungsmechanismus;
- Figur 7B: eine Schnittdarstellung entsprechend der Schnittlinie B-B der Figur 7A;
- Figur 8: in mit der Figur 5C übereinstimmender Seitenansicht die Verkleidung mit Hervorhebung einer Betätigungsöffnung in einer Seitenfläche des Abschlusselements;
- Figur 8C: in vergrößertem Maßstab die Betätigungsöffnung, über die ein Verriegelungselement des Verriegelungsmechanismus verstellbar ist, um eine Verriegelung manuell zu lösen und das Abschlusselement von dem Aufnahmekörper abnehmen zu können;
- Figur 9: in Einzelansicht eine zweite Verriegelungsbaugruppe des Abschlusselements der Ausführungsvariante der Figuren 3 bis 8C;
- Figur 10: perspektivisch die Verkleidung gemäß der Ausführungsvariante der Figuren 3 bis 9.

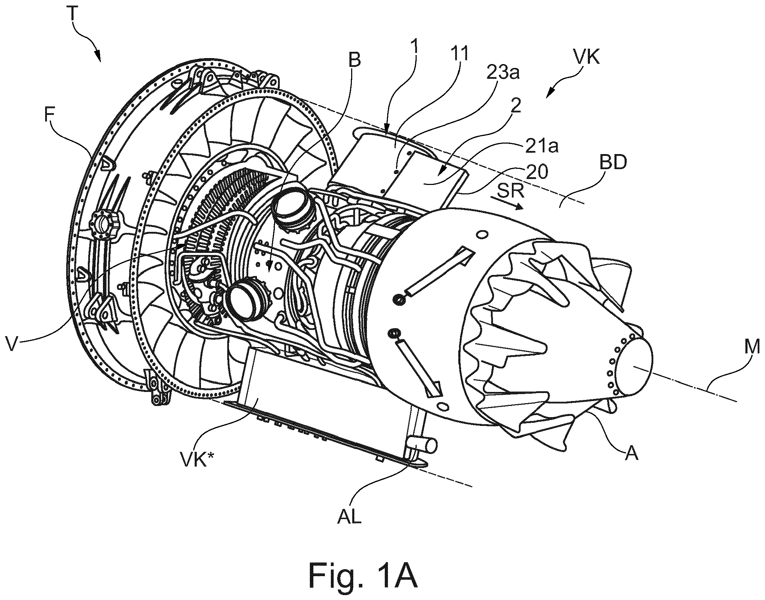

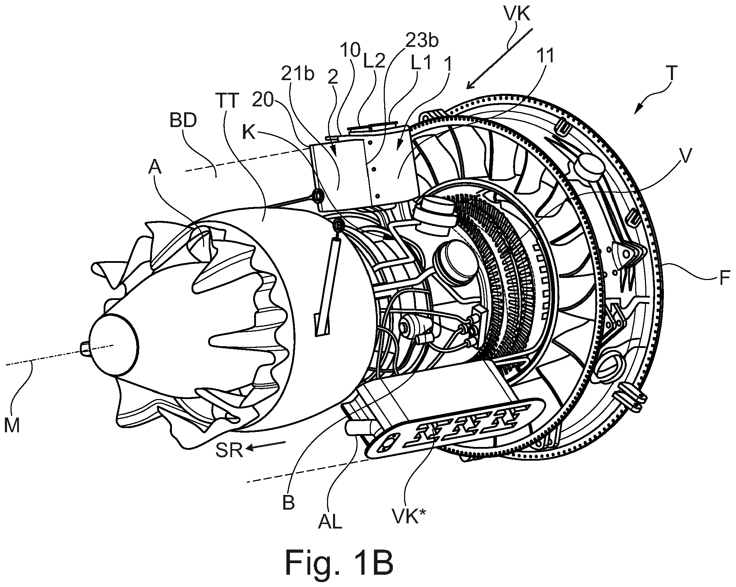

Die Figuren 1A und 1B zeigen in perspektivischer Darstellung ein Turbofan-Triebwerk T, bei dem in an sich bekannter Weise ein Fan F, ein Verdichter V, ein Brennkammerabschnitt B, eine Turbine TT und ein Auslass A entlang einer Mittelachse M des Turbofan-Triebwerks T hintereinander angeordnet sind. Der Verdichter V weist typischerweise einen Niederdruck-, Mitteldruck- und Hochdruckverdichter auf. Ebenso ist eine Hochdruck-, Mitteldruck- und Niederdruckturbine Teil der Turbine TT, über die der Fan F angetrieben wird. Der Verdichter V, der Brennkammerabschnitt B und die Turbine TT sind Teil eines Kerntriebwerks K des Turbofan-Triebwerks T, dem über den Fan F ein Primärstrom an einströmenden Fluid zugeführt wird. Ein entsprechender Primärstromkanal für das einströmende Fluid verläuft folglich durch das Kerntriebwerk K entlang der Mittelachse M.

Ergänzend hierzu ist für die Aufbringung eines Großteils des Schubs ein Sekundärstromkanal in Form eines das Kerntriebwerk K umgebenden Bypasskanals BD vorgesehen. Diesem Bypasskanal BD wird über den Fan F ein Großteil des einströmenden Fluids zugeleitet und entlang einer Strömungsrichtung SR in Richtung des Auslasses A gefördert. Der Bypasskanal BD wird dabei von einer radial innen liegenden und in den Figuren 1A und 1B nicht dargestellten Kerntriebwerksabdeckung oder inneren Bypasskanalwandung und einer radial außen liegenden und in den Figuren 1A und 1B ebenfalls nicht dargestellten äußeren Bypasskanalwandung begrenzt.

Innerhalb des Bypasskanals BD sind vorliegend zwei jeweils gehäuseartig ausgebildete Verkleidungen VK und VK* (englisch "splitter fairing") vorgesehen. Diese (oberen und unteren) Verkleidungen VK und VK* sind vollständig innerhalb des Bypasskanals BD angeordnet und erstrecken sich bezogen auf die Mittelachse M in radialer Richtung zwischen der inneren Bypasskanalwandung und der radial weiter außen liegenden Bypasskanalwandung. Die Verkleidungen VK und VK* erstrecken sich jeweils auch in diejenige Strömungsrichtung, in der das Fluid vom Fan F durch den Bypasskanal BD in Richtung des Auslasses A strömt. Dabei sind die Verkleidungen VK und VK* jeweils zur schützenden Ummantelung unterschiedlicher Komponenten vorgesehen, die in radialer Richtung bezüglich der Mittelachse M verlaufen und durch den Bypasskanal BD in radialer Richtung hindurchgeführt werden müssen. Beispielsweise sind hierüber Leitung L1, L2 verkleidet, in denen Kraftstoff, Öl oder Luft geführt ist. Alternativ oder ergänzen können über die Verkleidungen VK und VK* Koppelelemente zur mechanischen Kopplung und für den Antrieb von Systemen verkleidet sein, die zur besseren Kühlung radial außen bezüglich des Kerntriebwerks K in einem äußeren Teil des Triebwerksgehäuses untergebracht sind, wie z.B. ein Zusatzgetriebe, eine Kraftstoffpumpe, eine Ölpumpe oder ein Generator. An der einen Verkleidung VK* ist beispielsweise zudem eine Auslassleitung AL vorgesehen, über die eine Fluidverbindung zwischen einem Hohlraum in der Triebwerksgondel und dem Bypasskanal BD bereitgestellt ist.

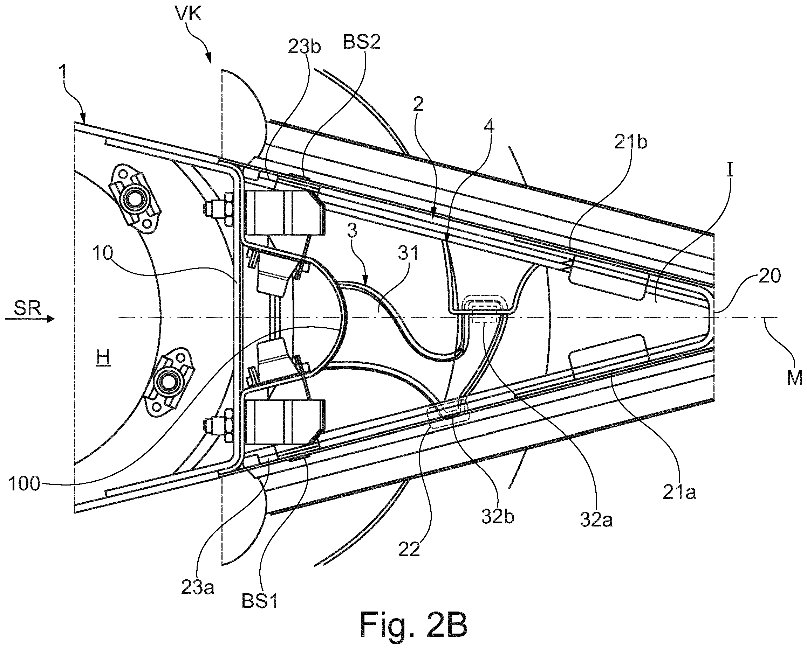

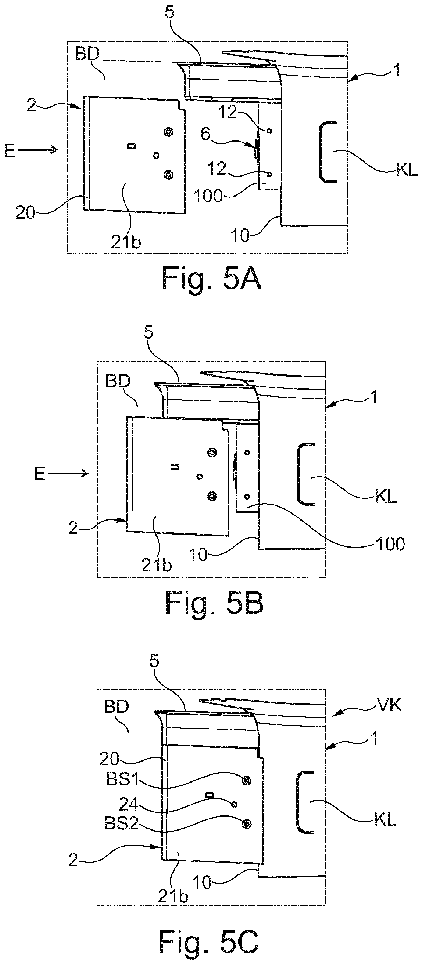

Die Verkleidungen VK und VK* sind über den Umfang des Kerntriebwerks K versetzt zueinander angeordnet und nehmen vorliegend unterschiedliche Komponenten auf. In der Verkleidung VK sind beispielsweise wenigstens zwei Leitungen L1 und L2 in einem von der Verkleidung VK definierten Hohlraum H (vgl. Figur 2B) aufgenommen, die jeweils unter Druck stehende Luft führen. Der Hohlraum H wird hierbei von einem hohlzylindrischen Druckkörper oder Aufnahmekörper 1 der Verkleidung VK definiert. Dieser Aufnahmekörper 1 ist beispielsweise aus einem faserverstärkten Kompositwerkstoff hergestellt. Aufgrund seiner Geometrie und dem gewählten Material kann der Aufnahmekörper 1 bei einem Bersten einer Leitung L1, L2 einem in dem Hohlraum H entstehenden erhöhten Druck stand und lässt aus einer Leitung L1, L2 ausströmendes Fluid allenfalls gezielt in den Bypasskanal BD über eine Überdruckklappe KL des Aufnahmekörpers 1 entweichen, die an einer seitlichen Mantelfläche 11 des Aufnahmekörper 1 vorgesehen ist (vgl. Figuren 5A bis 5C).

Zur Optimierung der Umströmung der Verkleidung VK weist diese ein Abschlusselement 2 auf, das sich in Strömungsrichtung SR zu einem Endleistenabschnitt 20 hin verjüngt. Das Abschlusselement 2 wird folglich an einer Rückseite 10 des Aufnahmekörpers 1 entlang der Mittelachse M angebracht, um eine aerodynamisch verbesserte Umströmung der Verkleidung VK in dem Bypasskanal BD zu erreichen. Das hier im Querschnitt V-förmige Abschlusselement 2 ist als separates Bauteil ausgebildet und lösbar mit dem Aufnahmekörper 1 verbunden. Das Abschlusselement 2 ist dabei mit zwei in den Endleistenabschnitt 20 mündenden Seitenflächen 21a und 21b an seitlichen Mantelflächen 11 des Aufnahmekörpers 1 fixiert, sodass die seitlichen Mantelflächen 11 des Aufnahmekörper 1 in die Seitenflächen 21a und 21b des Abschlusselements 2 übergehen. Die Fixierung des Abschlusselements 2 an dem Aufnahmekörper 1 erfolgt hierbei an randnahen Befestigungsabschnitten 23a und 23b der Seitenflächen 21a, 21b über separate Befestigungselemente, wie zum Beispiel Schrauben, Niete oder Bolzen.

Das Abschlusselement 2 ist hier mit Fokus auf eine aerodynamische vorteilhafte Form ausgebildet, während der Aufnahmekörper 1 vornehmlich für eventuell auftretende Druckbelastungen und gegebenenfalls auch feuerbeständig ausgelegt ist. Derart können an der Verkleidung VK für die unterschiedlichen Funktionen angepasste und hinsichtlich Material und Geometrie zueinander verschiedene Bauteile bereitgestellt werden. Zusätzlich ist das Abschlusselement 2 lösbar mit dem Aufnahmekörper 1 verbunden, sodass durch ein Abnehmen des Abschlusselements 2 von dem Aufnahmekörper 1 beispielsweise unterhalb der Verkleidung VK liegende Komponenten des Turbofan-Triebwerks T, insbesondere im Bereich der Kerntriebwerksabdeckung sowie gegebenenfalls in dem Aufnahmekörper 1 aufgenommene Komponenten leichter zugänglich sind. Vorliegend ist über das Abschlusselement 2 mit einem Endleistenabschnitt 20 z.B. eine abnehmbare Hinterkante für die Verkleidung VK bereitgestellt, so dass im Bereich der Rückseite 10 des Aufnahmekörpers 1 angeordnete Komponenten bereits durch Entfernen des Abschlusselements 2 (besser) zugänglich sind. Alternativ oder ergänzend kann aber selbstverständlich auch ein lösbar mit dem Aufnahmekörper 2 verbundenes Abschlusselement vorgesehen werden, das mit einem dem Fluidstrom zugewandten, strömungsoptimierten Nasenleistenabschnitt an einer Vorderseite des Aufnahmekörpers 1 angeordnet ist.

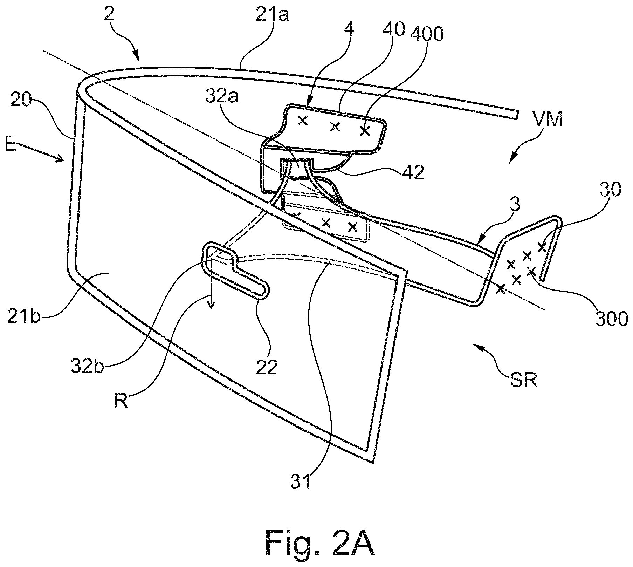

In den Figuren 2A und 2B ist eine mögliche Weiterbildung der Ausführungsvariante nach den Figuren 1A und 1B veranschaulicht. Hierbei ist zur Sicherung des abnehmbaren Abschlusselements 2 an dem Aufnahmekörper 1 ein selbsttätig wirkender Verriegelungsmechanismus VM vorgesehen. Über diesen Verriegelungsmechanismus VM kann das Abschlusselement 2 einfach an der Rückseite 10 des Aufnahmekörpers 1 entlang einer parallel zur Mittelachse M verlaufenden Anbringungsrichtung E an den Aufnahmekörper 1 gesteckt werden und ist dann bei Erreichen einer vorgegebenen Endlage über den Verriegelungsmechanismus VM automatisch arretiert.

Der Verriegelungsmechanismus VM weist hierfür ein Verriegelungselement 3 in Form einer an der Rückseite 10 des Aufnahmekörpers 1 fixierten Federplatte 3 auf. Diese Federplatte 3 steht zungenförmig an der Rückseite 10 des Aufnahmekörpers 1 in axialer Richtung vor und ist über einen Befestigungsabschnitt 30 der Federplatte 3 an dem Aufnahmekörper 1 fixiert. Die Fixierung der Federplatte 3 über den Befestigungsabschnitt 30 erfolgt vorliegend über mehrere Schweißstellen 300 an einem an der Rückseite 10 des Aufnahmekörpers 1 in Strömungsrichtung SR vorstehenden Vorsprung 100 des Aufnahmekörpers 1. An seinem von dem Befestigungsabschnitt 30 vorstehenden Ende bildet die Federplatte 32 zwei jeweils quer zur Erstreckungsrichtung der Federplatte 3 vorspringende Verriegelungsabschnitte in Form von Verriegelungsnasen 32a und 32b aus. Diese Verriegelungsnasen 32a und 32b sind an einem von der Rückseite 10 vorstehenden und längserstreckten Federarm 31 der Federplatte 3 ausgebildet. Hierdurch sind die Verriegelungsnasen 32a und 32b senkrecht zur Erstreckungsrichtung des Federarms 31 und damit im Wesentlichen in radialer Richtung bezüglich der Mittelachse M (und der Anbringungsrichtung E des Abschlusselements 2) elastisch verlagerbar.

An dem Abschlusselement 2 sind ferner Sicherungsschlitze 22 und 42 an den sich gegenüberliegenden Seitenflächen 21a und 21b vorgesehen. Mit diesen Sicherungsschlitzen 22 und 42 kann jeweils eine der Verriegelungsnasen 32a und 32b formschlüssig in Eingriff gebracht werden, um das Abschlusselement 2 an dem Aufnahmekörper 1 zu halten. Ein erster Sicherungsschlitz 42 ist an einem Halteteil 4 des Abschlusselements 2 ausgebildet. Dieses Halteteil 4 ist an einer Innenseite der einen Seitenfläche 21a fixiert. Hierfür ist eine Basis 40 des Halteteils 4 über mehrere Schweißstellen 400 an der Innenseite der Seitenfläche 21a fixiert. An einem von der Basis 40 vorstehenden Abschnitt des Halteteils 4 ist dabei der erste, hier L-förmige Sicherungsschlitz 42 ausgebildet, in den die eine (erste) Verriegelungsnase 32a entlang der Anbringungsrichtung E unter radialer Verlagerung des Federarms 31 der Federplatte 3 eingreifen kann. Ist das Abschlusselement 2 bestimmungsgemäß an den Aufnahmekörper 1 angesteckt, befindet sich die eine (erste) Verriegelungsnase 32a an dem ersten Sicherungsschlitz 42 des Halteteils 4 an einem sich in radialer Richtung erstreckenden Bereich des Sicherungssitzes 42. Unter der Rückstellkraft des Federarms 42 wird dann die Verriegelungsnase 32a hier hinein verstellt, sodass dann von der ersten Verriegelungsnase 32a der Abschnitt des Halteteils 4 hintergriffen ist, der den Sicherungsschlitz 42 ausbildet.

Ein zu dem ersten Sicherungsschlitz 42 des Halteteils 4 symmetrisch ausgebildeter zweiter Sicherungsschlitz 22 ist an der gegenüberliegenden Seitenfläche 21b des Abschlusselements 2 vorgesehen. Dieser zweite Sicherungsschlitz 42 ist jedoch unmittelbar in der Seitenfläche 21b ausgeformt, sodass die andere, zweite Verriegelungsnase 32b der Federplatte 3 bei Eingriff in diesen zweiten Sicherungsschlitz 22 von einer Außenseite der Seitenfläche 21b her zugänglich ist. Während damit das Halteteil 4 und die damit formschlüssige verbundene erste Verriegelungsnase 32a der Federplatte 3 vollständig in einem von den Seitenflächen 21a und 21b des Abschlusselements 2 und der Rückseite 10 des Aufnahmekörpers eingefassten, hier somit dreiecksförmigen Innenraum I untergebracht ist und damit bei aufgestecktem Abschlusselement 2 von außen nicht zugänglich sind, liegt die andere, zweite Verriegelungsnase 32b an der Seitenfläche 21b des Abschlusselements 2 von außen zugänglich vor. Derart kann eine Verriegelung über den selbsttätig wirkenden Verriegelungsmechanismus V manuell von außen gelöst werden, um das Abschlusselement 2 wieder von dem Aufnahmekörper 1 der Verkleidung VK abnehmen zu können.

Der selbsttätig wirkende Verriegelungsmechanismus VM, über den das Abschlusselement 2 auch an dem Aufnahmekörper 1 weiterhin gesichert ist, wenn bereits an den Befestigungsabschnitten 23a und 23b vorgesehene Befestigungselemente entfernt wurden, kann somit manuell gelöst werden, indem an der einen Seitenfläche 21b von außen an der hier zugänglichen Verriegelungsnase 32b angegriffen und diese entlang einer Betätigungsrichtung R innerhalb des zugehörigen Sicherungsschlitzes 22 radial verlagert wird. Dabei wird durch eine Verlagerung der Verriegelungsnase 32b diese so weit manuell verlagert, dass hierüber ein den Sicherungsschlitz 22 berandender Abschnitt des Abschlusselements 2 nicht mehr hintergriffen ist und folglich das Abschlusselement 2 entgegengesetzt zur ursprünglichen Anbringungsrichtung E von dem Aufnahmekörper 1 abgezogen werden kann. Da die beiden Verriegelungsnasen 32a und 32b für die axiale Sicherung an den sich gegenüberliegenden Seitenflächen 21a und 21b über den Federarm 31 der Federplatte 3 starr miteinander verbunden sind, wird bei einer Verlagerung der einen Verriegelungsnase 32b auch die gegenüberliegende Verriegelungsnase 32a mit verlagert. Bei Verlagerung der ersten Verriegelungsnase 32b in Betätigungsrichtung R wird somit synchron ein Hintergriff an dem innen liegenden Halteteil 4 gelöst. Auf diese Art und Weise kann bequem manuell eine Entriegelung von einer Seite des Abschlusselements 2 aus erfolgen, nachdem die an Befestigungsstellen BS1 und BS2 zur Fixierung des Abschlusselements 2 an dem Aufnahmekörper 1 vorgesehenen Befestigungselemente entfernt wurden. Über den Verriegelungsmechanismus VM ist dabei erreicht, dass das Abschlusselement 2 zunächst weiterhin an dem Aufnahmekörper 1 verbleibt, auch wenn die entsprechenden Befestigungselemente entfernt wurden. Damit erleichtert der Verriegelungsmechanismus VM nicht nur die Montage des Abschlusselements 2 an den Aufnahmekörper 1, sondern auch dessen Demontage, um beispielsweise für eine Wartung oder Reparatur unterhalb des Abschlusselements 2 liegende Komponenten des Turbofan-Triebwerks T zugänglich zu machen.

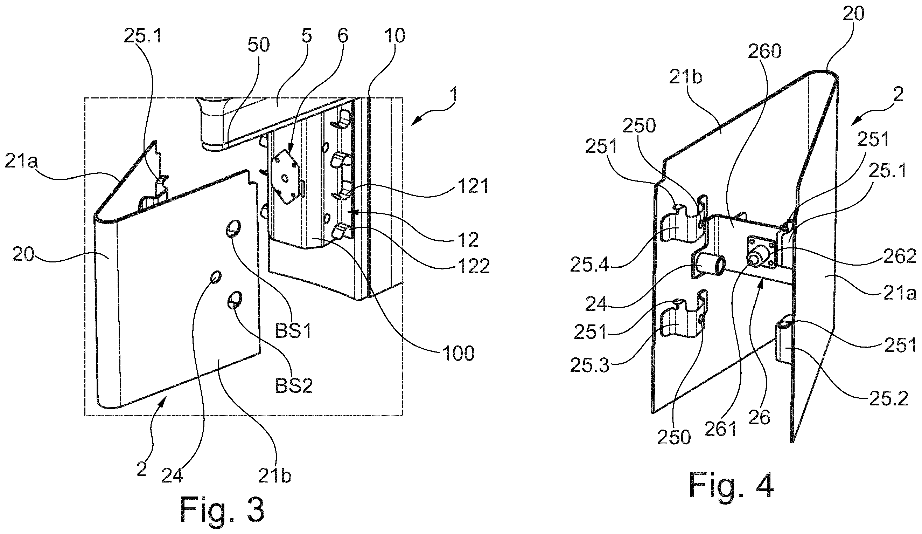

Die Figuren 3, 4, 5A bis 5C, 6A bis 6B, 7, 7A bis 7B, 8 und 8C veranschaulichen eine alternative Weiterbildung einer Verkleidung VK gemäß der Variante der Figuren 1A und 1B, bei der insbesondere ein alternativ ausgestalteter, selbsttätig wirkender Verriegelungsmechanismus VM vorgesehen ist.

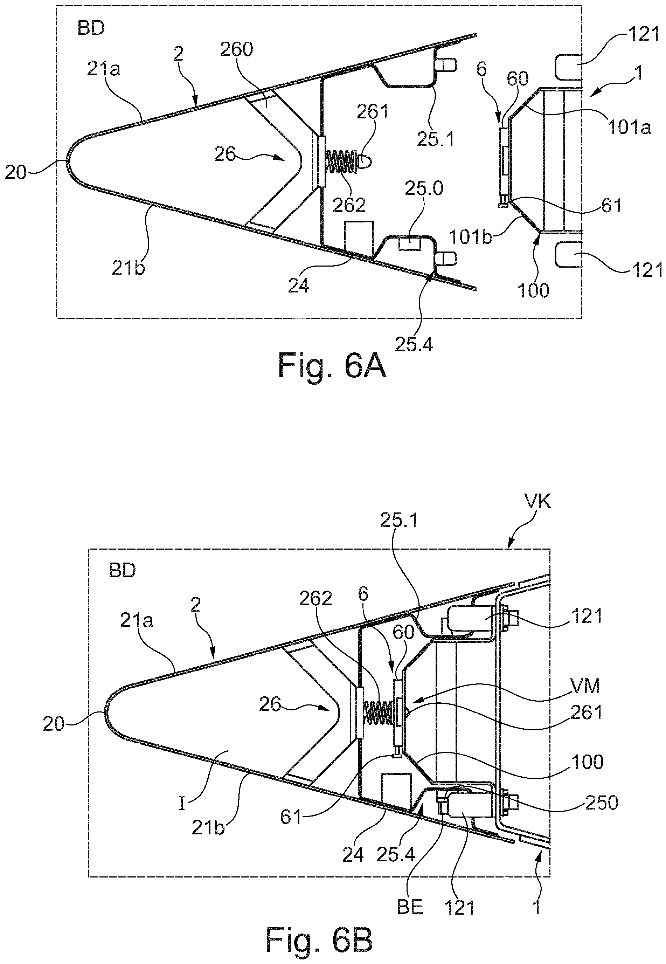

Das Abschlusselement 2 ist auch hier mit V-förmigen Querschnitt ausgebildet und an eine Rückseite 10 des Aufnahmekörpers 1 entlang der Anbringungsrichtung E und damit in axialer Richtung bezüglich der Mittelachse M ansteckbar. Das Abschlusselement 2 ist hierbei von nur einer der beiden Seitenflächen 21a, 21b aus an dem Aufnahmekörper 1 endgültig fixierbar und bei Bedarf wieder demontierbar. So sind beispielsweise nur an der einen Seitenfläche 21b Bohrungen für Befestigungsstellen BS1 und BS2 vorgesehen, durch die hindurch Befestigungselemente BE (vgl. Figur 6B), wie zum Beispiel Schrauben oder Bolzen eingeführt werden können, wenn das Abschlusselement 2 in einer bestimmungsgemäßen Endlage an dem Aufnahmekörper 1 vorliegt. Um auch hier das Abschlusselement 2 über eine selbsttätig wirkende Sicherung in dieser Endlage zu halten, bis die zusätzlich vorgesehenen Befestigungselemente BE angebracht sind oder wenn diese Befestigungselemente BE wieder entfernt wurden, weist ein Verriegelungsmechanismus VM in dieser Variante einerseits ein Verriegelungselement in Form eines Verriegelungshakens 61 an dem Aufnahmekörper 1 und andererseits einen Steckzapfen 261 an dem Abschlusselement 2 auf.

Der Steckzapfen 261 des Abschlusselements 2 ist dabei Teil einer zweiten Verriegelungsbaugruppe 26, die an dem Abschlusselement 2 vorgesehen ist. Die zweite Verriegelungsbaugruppe 26 ist dabei vollständig innerhalb eines von den zwei sich gegenüberliegenden Seitenflächen 21a und 21b und der Rückseite 10 des Aufnahmekörpers 1 eingefassten Innenraums I untergebracht, wenn das Abschlusselement 2 an dem Aufnahmekörper 1 angebracht ist. Teil der zweiten Verriegelungsbaugruppe 26 ist unter anderem eine Trägerplatte 260, über die die beiden Seitenflächen 21a und 21b starr miteinander verbunden sind. An dieser Trägerplatte 260 ist der Steckzapfen 261 fixiert und steht von der Trägerplatte 260 in Anbringungsrichtung E ab. An dem Steckzapfen 261 ist ferner ein Federelement in Form einer Druckfeder 262 gelagert.

Eine mit der zweiten Verriegelungsbaugruppe 26 des Abschlusselements 2 zusammenwirkende erste Verriegelungsbaugruppe 6 ist an dem in Strömungsrichtung SR und damit entgegengesetzt zur Anbringungsrichtung E vorspringenden Vorsprung 100 des Aufnahmekörpers 1 vorgesehen. Teil dieser ersten Verriegelungsbaugruppe 6 ist der verstellbar gelagerte Verriegelungshaken 61. Dieser Verriegelungshaken 61 ist an einem Träger 60 der ersten Verriegelungsbaugruppe 6 gelagert. Der Träger 60 bildet dabei eine Einstecköffnung 600 für den Steckzapfen 261 aus.

Bei der Anbringung des Abschlusselements 2 an den Aufnahmekörper 1, die anhand der Figuren 5A, 5B und 5C in unterschiedlichen Phasen veranschaulicht ist, wird das Abschlusselement 2 entlang der Anbringungsrichtung E der Rückseite 10 des Aufnahmekörpers 1 angenähert und an den Vorsprung 100 gesteckt. Hat das Abschlusselement 2 eine bestimmungsgemäße Endlage erreicht, durchgreift der Steckzapfen 261 mit einem sich konisch verjüngenden Ende die Einstiegsöffnung 100 an dem Träger 60 der ersten Verriegelungsbaugruppe 6. Der Durchmesser der Einstecköffnung 600 ist hierbei so bemessen, dass die Druckfeder 262 nicht durch die Einstecköffnung 600 geführt werden kann und sich folglich an dem Träger 60 abstützt. Die Druckfeder 262 wird folglich komprimiert und hierdurch gespannt, bis der Steckzapfen 261 mit seinem Ende maximal durch die Einstecköffnung 600 geführt ist. Der Steckzapfen 261 ist hierbei maximal eingeführt, wenn eine vor dem sich konisch verjüngenden Ende des Steckzapfens 261 liegende, umlaufende Rille in der Anbringungsrichtung E aus der Einstecköffnung 600 ragt, sodass der Verriegelungshaken 61 hieran selbsttätig formschlüssig angreifen kann. Der Verriegelungshaken 61 ist hierbei in eine Verriegelungsposition federbelastet vorgespannt, in der der Verriegelungshaken 61 formschlüssig in die Rille des Steckzapfens 261 eingreift. Beim Einstecken des Steckzapfens 261 an den Träger 60 wird der Verriegelungshaken 61 folglich zunächst entgegen einer Federkraft über das konische Ende des Steckzapfens 61 verlagert, bis ein Eingriff in die Rille möglich ist. Der Verriegelungshaken 61 ist dabei um eine zur Anbringungsrichtung E parallel verlaufende Schwenkachse an dem Träger 60 drehbar gelagert. Alternativ kann der Verriegelungshaken 61 beispielsweise auch quer zur Anbringungsrichtung E verschieblich an dem Träger 60 gelagert sein, um nach Art eines Sperrstiftes in die Rille des Steckzapfens 261 einzugreifen.

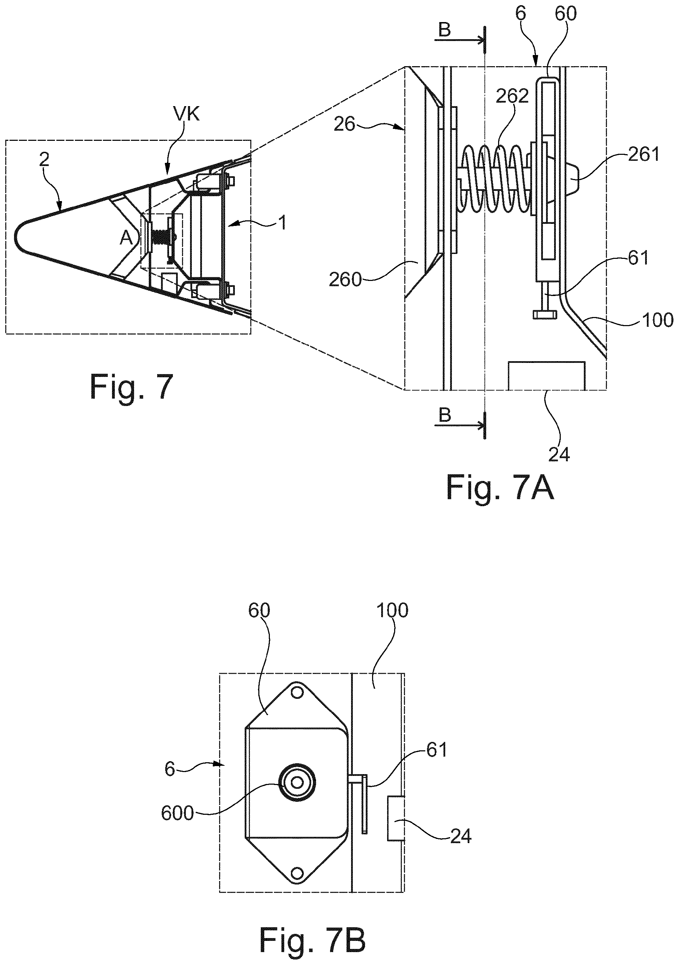

Über die im verriegelten Zustand des Verriegelungsmechanismus VM komprimierte Druckfeder 262 ist der formschlüssige Eingriff des Verriegelungshakens 61 in den Steckzapfen 261 gesichert. So wird hierüber der Steckzapfen 261 entgegengesetzt zur Anbringungsrichtung E gegen den Träger 60 und den formschlüssig in den Steckzapfen 261 eingreifenden Verriegelungshaken 61 belastet. Hierdurch ist der Verriegelungshaken 261 kraftschlüssig mit dem Träger 60 und/oder einem an die Rille angrenzenden Rand des Steckzapfens 261 verbunden. Derart kann der Verriegelungshaken 61 nicht ohne Weiteres außer Eingriff mit dem Steckzapfen 261 geraten. Die Funktionsweise des Verriegelungsmechanismus VM ist ebenfalls in Zusammenschau der Figuren 5A bis 5C mit den Figuren 6A bis 6B, 7 und 7A bis 7B näher veranschaulicht.

Insbesondere aus diesen Figuren ist ersichtlich, dass an dem Vorsprung 100 des Aufnahmekörpers 1 zusätzliche Führungsabschnitte 101a und 101b mit schräg zur Anbringungsrichtung E verlaufenden Führungsflächen vorgesehen sind. Über diese Führungsabschnitte 101a und 101b ist das Abschlusselement 2 beim Anstecken an die Rückseite 10 des Aufnahmekörpers 1 körperlich bis in die bestimmungsgemäße Endlage geführt und wird hierbei zentriert, und zwar seitlich quer zu Anbringungsrichtung E entlang einer ersten Achse. Diese erste (virtuelle) Achse verläuft z.B. in den Figuren 6A und 6B jeweils vertikal.

Ferner sind an der Rückseite 10 seitlich neben dem Vorsprung 100 mehrere Leitmittel 12 mit sich gegenüberliegenden, jeweils gebogenen Leitelementen 121 und 122 an dem Aufnahmekörper 1 ausgebildet. Zwischen diesen Leitelementen 121, 122 werden an den Innenseiten der Seitenflächen 21a und 21b des Abschlusselements 2 vorgesehene Befestigungsblöcke in Form von Befestigungsdomen 25.1 bis 25.4 aufgenommen. Hierbei sind jeweils zwei Befestigungsdome 25.1, 25.2; 25.3, 25.4 an einer Innenseite jeweils einer Seitenfläche 21a oder 21b vorgesehen. Vorliegend sind die einzelnen Befestigungsdome 25.1 bis 25.4 jeweils durch ein angeschweißtes Schraubblech ausgebildet. Jeder Befestigungsdom 25.1 bis 25.4 ist bei bestimmungsgemäßer Anbringung des Abschlusselements 2 an einem Leitelement 12 des Aufnahmekörpers 1 aufgenommen und kann zwischen dem jeweiligen Paar von Leitelementen 121 und 122 formschlüssig und gegebenenfalls auch kraftschlüssig gehalten sein. Beispielsweise kann vorgesehen sein, dass ein Paar Leitelemente 121, 122 eines Leitmittels 12 als Paar aufeinander zu vorgespannter Rasthaken ausgebildet ist, so dass ein Befestigungsdom 25.1 bis 25.4 hieran geklipst werden kann. So kann über eingeklipste Befestigungsdome 25.1 bis 25.4 eine zusätzliche Arretierung des abnehmbaren Abschlusselements 2 an dem Aufnahmekörper 1 bereitgestellt werden.

Grundsätzlich dienen die Leitelemente 121, 122 der Leitmittel 12 dazu, über die hieran während der Montage des Abschlusselements 2 entlanggeführten Befestigungsdome 25.1 bis 25.4 dem Abschlusselement 2 eine bestimmungsgemäße Endlage bezüglich einer radial zur Mittelachse M verlaufenden (zweiten) Achse vorzugeben. Diese zweite (virtuelle) Achse verläuft z.B. in den Figuren 5A bis 5C jeweils vertikal. Über die Leitmittel 12 wird folglich dem Abschlusselement 2 eine bestimmungsgemäße radiale Position bezüglich des Aufnahmekörpers 1 und auch eines nachfolgend noch näher erläuterten Abstandshalters 5 vorgegeben. Insbesondere ist über die Leitmittel 12 sichergestellt, dass die Seitenflächen 21a, 21b des Abschlusselements 2 nicht über eine Nut 50 des Abstandshalters 5 radial nach außen vorstehen. Die Leitmittel 12 verhindern damit ebenfalls ein Verbiegen der Seitenflächen 21a, 21b bei der Anbringung an den Aufnahmekörper 1.

Ein Befestigungsdompaar 25.3, 25.4 der einen Seitenfläche 21b ist mit Durchgangsöffnungen 250 für je eine Befestigungselement in Form eines Schraubbolzens BE vorgesehen. Die jeweilige Durchgangsöffnung 250 liegt dabei innerhalb des Innenraums I einer eine Befestigungsstelle BS1 oder BS2 definierenden Durchgangsbohrung an der Außenseite der Seitenfläche 21b gegenüber. Derart kann der jeweilige Schraubbolzen BE bei angestecktem Abschlusselement 2 zur (zusätzlichen) Fixierung des Abschlusselements 2 an dem Aufnahmekörper 1 von außen angebracht und an den Vorsprung 100 des Aufnahmekörpers 1 eingedreht werden. Obwohl in der dargestellten Variante zwei Befestigungsdome 25.1, 25.2 oder 25.3, 25.4 je Seite vorgesehen sind, ist dies natürlich nicht zwingend. Beispielsweise kann ein Befestigungsdom je Seite ausreichend sein.

Um zu vermeiden, dass das Abschlusselement 2 über eine vorgegebene Lage hinaus entlang der Anbringungsrichtung E auf den Aufnahmekörper 1 aufgeschoben wird und z.B. die Kanten der Seitenflächen 21a, 21b an der zusammengebauten Verkleidung VK über die Mantelfläche 11 des Aufnahmekörpers 1 vorstehen, bilden je zwei sich gegenüberliegende Befestigungsdome 25.1, 25.4 und 25.2, 25.3 Anschlagelemente in Form von in Anbringungsrichtung E vorstehender Anschlagnasen 251 aus. Diese Anschlagelemente 251, die seitlich neben dem Vorsprung 100 angeordnet sind, blockieren bei der Anbringung des Abschlusselements 2 an den Aufnahmekörper 1 eine weitere Verlagerung des Abschlusselements 2 relativ zu dem Aufnahmekörper 1 in die Anbringungsrichtung E, indem hieran der Aufnahmekörper 1 im Bereich eines Leitmittels 12 anschlägt. Auf diese Art und Weise ist über die Anschlagelemente 251 des Abschlusselements 2 eine Endlage des Abschlusselements 2 bezüglich des Aufnahmekörpers 1 vorgegeben, in der die Seitenflächen 21a und 21b bündig oder nahezu bündig mit der Mantelfläche 10 des Aufnahmekörpers 1 abschließen und dann die Fixierung des Abschlusselements 2 an dem Aufnahmekörper 1 erfolgt. Auch ist über die Anschlagnasen 251 ein zu weites Verschieben der Seitenflächen 21a, 21b entlang der Anbringungsrichtung E und eine eventuell hiermit verbundene, unerwünschte plastische Verformung der Seitenflächen 21a, 21b verhindert.

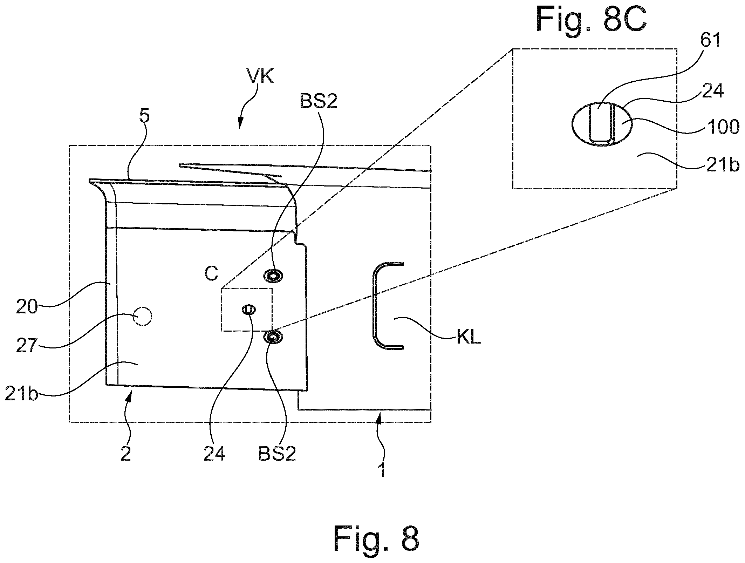

Bei der dargestellten Variante können Befestigungsstellen BS1 und BS2 für die zusätzliche Fixierung des Abschlusselements 2 an dem Aufnahmekörper 1 lediglich an einer der Seitenflächen 21a, 21b vorgesehen sein, um eine Montage und Demontage des Abschlusselements 2 über genau eine Seite vorzugeben. An der Seitenfläche 21b des Abschlusselements 2, an dem die Befestigungsstellen BS1 und BS2 vorgegeben sind, ist dann auch eine Betätigungsöffnung 24 vorgesehen, die in den Figuren 8 und 8C näher veranschaulicht ist. Über diese Betätigungsöffnung 24 ist ein Betätigungsarm oder -hebel des Verriegelungshakens 61 im Innenraum I zugänglich. Von einem Monteur kann folglich - gegebenenfalls mit einem Werkzeug - durch die Betätigungsöffnung 24 hindurch der Betätigungsarm oder -hebel und damit der Verriegelungshaken 61 erreicht werden, um diesen zu verstellen und damit eine Verriegelung zu lösen. Das Abschlusselement 2 bleibt dabei nach Entfernen aller Schraubbolzen BE über den Verriegelungsmechanismus VM noch an dem Aufnahmekörper 1 gehalten, bis der Verriegelungshaken 61 aufgrund einer Betätigung durch die Betätigungsöffnung 24 hindurch verstellt wird und damit das hierdurch entsicherte Abschlusselement 2 von dem Aufnahmekörper 1 abgezogen werden kann.

Um insbesondere bei der Demontage, aber auch bei der Montage des Abschlusselements 2 an den Aufnahmekörper 1 das Risiko zu minimieren, dass das abnehmbare und hier eine Hinterkante der Verkleidung VK bildende Abschlusselement 2 mit einer Komponente kollidiert, die an einer radial äußeren Bypasskanalwandung angeordnet ist, ist die Verkleidung VK entsprechend der Ausführungsvariante der Figuren 3 bis 8C zusätzlich mit einem Abstandshalter 5 ausgestattet.

Der Abstandshalter 5 erstreckt sich stegartig an der Rückseite 10 des Aufnahmekörpers 1 entlang der Anbringungsrichtung E und damit im Wesentlichen parallel zur Mittelachse M des Turbofan-Triebwerks T. Der Abstandhalter 5 steht dabei über den Vorsprung 100 des Aufnahmekörpers 1 hinaus an der Rückseite 10 an dem Aufnahmekörper 1 hervor und kann unabhängig von einem Kontakt des Abschlusselements 2 mit dem Vorsprung 100 eine körperliche Führung für das Abschlusselement 2 sowohl beim Anbringen an dem Aufnahmekörper 1 als auch beim Entfernen von dem Aufnahmekörper 1 definieren. Im bestimmungsgemäße verbundenen Zustand von Aufnahmekörper 1 und Abschlusselement 2 liegt das Abschlusselement 2 mit einer Oberseite an dem Abstandshalter 5. Hierbei kann der Endleistenabschnitt 20 des Abschlusselements 2 auch bündig mit Abstandshalter 5 abschließen. Ebenso können die Seitenflächen 21a und 21b Abschlusselements 2 bündig oder nahezu bündig mit einer äußeren Mantelfläche des Abstandshalters 5 abschließen. Hierfür liegt ein oberer Rand der jeweiligen Seitenfläche 21a, 21b in einem bestimmungsgemäßen verbundenen Zustand an einer umlaufenden Nut 50 des Abstandshalters 5 an.

Über den Abstandshalter 5 ist ein Mindestabstand des Abschlusselements 2 bezüglich der (in der Figur 5A gestrichelt dargestellten) äußeren Bypasskanalwandung im Bereich des Aufnahmekörpers 1 vorgegeben, insbesondere beim Anstecken des Abschlusselements 2 an den Aufnahmekörper 1 als auch beim Abziehen hiervon. Über den Abstandshalter 5 ist das Risiko minimiert, dass bei der Montage oder Demontage des Abschlusselements 2 dieses mit einer in Verlängerung des Abstandshalters 5 an der äußeren Bypasskanalwandung angeordneten Komponente kollidiert, zum Beispiel einem hier vorgesehenen Flächenlüfter. Abweichend von der dargestellten Ausführungsvariante kann ein entsprechender Abstandshalter (gegebenenfalls auch zusätzlich) für eine innere Bypasskanalwandung vorgesehen sein. Darüber hinaus verlängert der Abstandshalter 5 die aerodynamische Rundung des Endleistenabschnitts 20 zwischen dem Abstandselement 2 und der äußeren Bypasskanalwandung.

Der Abstandhalter 5 ist vorliegend als separates Bauteil ausgeführt, das an dem Aufnahmekörper 1 und/oder an der äußeren Bypasskanalwandung fixiert ist, zum Beispiel mittels wenigstens eines Bolzens. Hierbei kann der Abstandhalters 5 auch aus einem anderen Material ausgebildet sein als der Aufnahmekörper 1 und/oder das Abstandelement 2 der Verkleidung VK. Beispielsweise ist der Abstandhalter 5 aus einem Kompositwerkstoff hergestellt. In einer alternativen Ausführungsvariante wird der Abstandhalter 5 von dem Aufnahmekörper 1 ausgebildet, ist also hieran integral ausgeformt.

In einer anhand der Figur 8 exemplarisch veranschaulichten Weiterbildung kann an wenigstens einer Seitenfläche 21a, 21b des Abschlusselements 2 noch ein Drainageloch 27 vorgesehen sein. Dies ist beispielsweise von Vorteil, wenn innerhalb des Innenraums I der von den Seitenflächen 21a und 2b des Abstandselements 2 und der Rückseite 10 des Aufnahmekörper 1 im verbundenen Zustand eingefasst ist (weitere) Leitungen geführt sind. Hier kann über ein Drainageloch 27 eventuell aus einer solchen Leitung austretendes Fluid nach außen geführt werden.

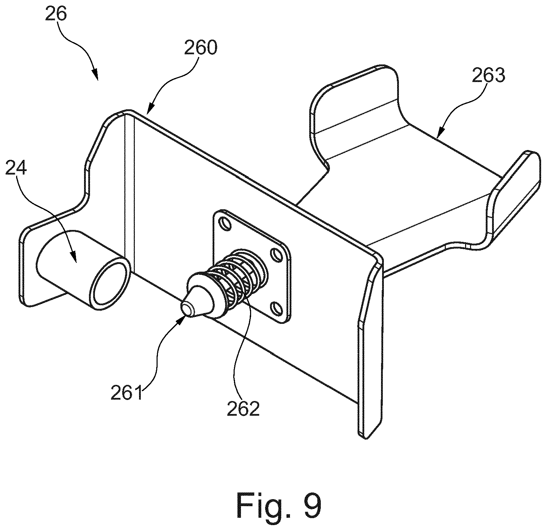

In der Figur 9 ist die zweite Verriegelungsbaugruppe 26 in perspektivischer Einzelansicht und mithin in vergrößertem Maßstab dargestellt. Auf einer Vorderseite der Trägerplatte 260 mit dem Steckzapfen 261 und der Druckfeder 262 befindet sich an einem seitlich vorstehenden Fortsatz ein hülsenförmiges Element für die Befestigungsöffnung 24. An einer Rückseite der Trägerplatte 260 ist mittig eine V-förmigen Stützstruktur 263 fixiert, beispielsweise angeschweißt. Diese Stützstruktur 263 dient der Abstützung der Trägerplatte 260 an den Seitenflächen 21a und 21b des Abschlusselements 2. Die Stützstruktur 263 ist hierfür an ihren beiden von der Trägerplatte 260 vorstehenden Enden über um gebogene Abschnitte an der Innenseite einer jeweiligen Seitenfläche 21a oder 21b fixiert, beispielsweise ebenfalls mittels Schweißen.

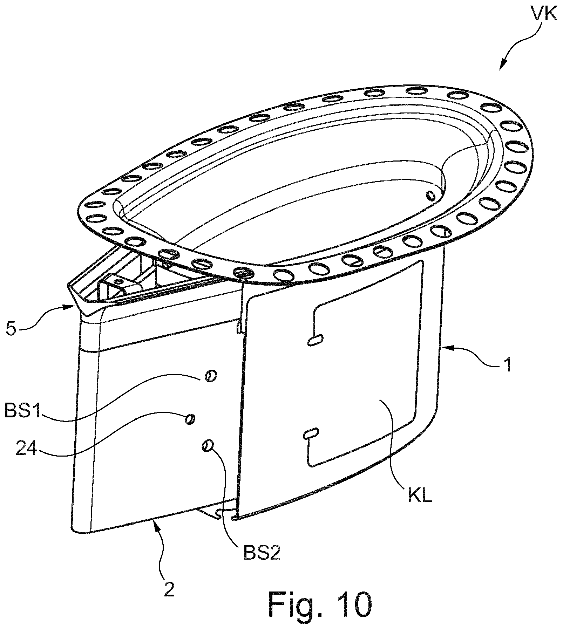

Die Figur 10 zeigt die Verkleidung VK der anhand der Figuren 3 bis 9 erläuterten Ausführungsvariante mit Aufnahmekörper 1, Abschlusselement 2 und Abstandshalter 5 im zusammengebauten Zustand in perspektivischer Ansicht und mit Blick auf diejenige Seite der Verkleidung VK, an der einerseits die Befestigungsstellen BS1 und BS2 sowie die Betätigungsöffnung 24 vorgesehen sind.

### Bezugszeichenliste

- 1: Aufnahmekörper
- 10: Rückseite
- 100: Vorsprung
- 101a, 101b: Führungsabschnitt
- 11: Mantelfläche
- 12: Leitmittel
- 121, 122: Leitelement
- 2: Abschlusselement
- 20: Endleistenabschnitt
- 21a, 21b: Seitenfläche
- 22: Sicherungsschlitz
- 23a, 23b: Befestigungsabschnitt
- 24: Betätigungsöffnung
- 25.1 - 25.4: Befestigungsdom
- 250: Durchgangsöffnung
- 251: Anschlagnase (Anschlagelement)
- 26: 2. Verriegelungsbaugruppe
- 260: Trägerplatte
- 261: Steckzapfen
- 262: Druckfeder (Federelement)
- 263: Stützstruktur
- 3: Verriegelungsplatte (Verriegelungselement)
- 30: Befestigungsabschnitt
- 300: Schweißstelle
- 31: Federarm
- 32a, 32b: Verriegelungsnase (Verriegelungsabschnitt)
- 4: Halteteil
- 40: Basis
- 400: Schweißstelle
- 42: Sicherungsschlitz
- 5: Abstandshalter
- 50: Nut
- 6: 1. Verriegelungsbaugruppe
- 60: Träger
- 600: Einstecköffnung
- 61: Verriegelungshaken (Verriegelungselement)
- A: Auslass
- AL: Auslassleitung
- B: Brennkammerabschnitt
- BD: Bypasskanal
- BE: Schraubbolzen (Befestigungselement)
- BS1, BS2: Befestigungsstelle
- E: Anbringungsrichtung
- F: Fan
- H: Hohlraum
- I: Innenraum
- K: Kerntriebwerk
- KL: Überdruckklappe
- L1, L2: Leitung
- M: Mittelachse / Rotationsachse
- R: Betätigungsrichtung
- SR: Strömungsrichtung
- T: Turbofan-Triebwerk
- TT: Turbine
- V: Verdichter
- VK, VK*: Verkleidung
- VM: Verriegelungsmechanismus

## Patentansprüche

1. Turbofan-Triebwerk, mit
- einem Kerntriebwerk (K) und mindestens einem Fan (F), mittels dem Fluid sowohl zu einem Primärstromkanal für das Kerntriebwerk (K) als auch zu einem Sekundärstromkanal (BD) des Turbofan-Triebwerks (T) geleitet wird, wobei der Sekundärstromkanal (BD) für einen äußeren, an dem Kerntriebwerk (K) vorbeigeführten Fluidstrom vorgesehen ist, und
- mindestens einer in dem Sekundärstromkanal (BD) angeordneten und von dem Fluidstrom im Betrieb des Turbofan-Triebwerks (T) umströmten Verkleidung (VK), die mindestens eine radial durch den Sekundärstromkanal (BD) geführte Komponente (L1, L2) des Turbofan-Triebwerks (T) zumindest teilweise verkleidet und die ein Abschlusselement (2) mit einem dem Fluidstrom zugewandten Nasenleistenabschnitt und/oder einem in Strömungsrichtung (SR) des Fluidstroms liegenden Endleistenabschnitt (20) aufweist,
wobei das Abschlusselement (2) mit dem Nasenleisten- und/oder Endleistenabschnitt (20) ein separates Bauteil ist, das mit einem im Sekundärstromkanal (BD) angeordneten und die mindestens eine Komponente (L1, L2) aufnehmenden Aufnahmekörper (1) der Verkleidung (VK) lösbar verbunden ist,
**dadurch gekennzeichnet, dass**
das Abschlusselement (2) an den Aufnahmekörper (1) steckbar ist und das an den Aufnahmekörper (1) gesteckte Abschlusselement (2) über einen selbsttätig wirkenden Verriegelungsmechanismus (VM) an dem Aufnahmekörper (1) werkzeuglos gesichert ist.

2. Turbofan-Triebwerk nach Anspruch 1, **dadurch gekennzeichnet, dass** der Fan (F), das Kerntriebwerk (K) und ein Auslass des Turbofan-Triebwerks (T) entlang einer Mittelachse (M) hintereinander angeordnet sind und das Abschlusselement (2) entlang einer axialen Richtung bezüglich dieser Mittelachse (M) an dem Aufnahmekörper (1) bestimmungsgemäß anbringbar ist.

3. Turbofan-Triebwerk nach Anspruch 1 oder 2, **dadurch gekennzeichnet, dass** der Verriegelungsmechanismus (VM) mindestens ein Verriegelungselement (3, 6) an dem Aufnahmekörper (1) umfasst, welches selbsttätig mit einem Element (261) und/oder Abschnitt (21b) des Abschlusselements (2) verriegelt, wenn das Abschlusselement (2) bestimmungsgemäß an den Aufnahmekörper (1) gesteckt ist.

4. Turbofan-Triebwerk nach Anspruch 3, **dadurch gekennzeichnet, dass** das Verriegelungselement (3) des Aufnahmekörpers (1) und/oder das Element (261) des Abschlusselements (2) elastisch ausgebildet und/oder federnd gelagert ist.

5. Turbofan-Triebwerk nach Anspruch 3 oder 4, **dadurch gekennzeichnet, dass** das Verriegelungselement eine elastische Federplatte (3) umfasst, die in einem verriegelten Zustand des Verriegelungsmechanismus (VM) mit mindestens einem Verriegelungsabschnitt (32a, 32b) formschlüssig in einen Sicherungsschlitz (22, 42) eingreift.

6. Turbofan-Triebwerk nach Anspruch 5, **dadurch gekennzeichnet, dass** die Federplatte (3) zwei Verriegelungsabschnitte (32a, 32b) aufweist, von denen ein erster Verriegelungsabschnitt (32a) in einen ersten Sicherungsschlitz (42) eines Halteteils (4) eingreift, das an einer ersten Seitenfläche (21a) des Abschlusselements (2) vorgesehen ist, und ein zweiter Verriegelungsabschnitt (32b) in einen zweiten Sicherungsschlitz (22) an einer der ersten Seitenfläche (32a) gegenüberliegenden zweiten Seitenfläche (21b) des Abschlusselements (2) eingreift.

7. Turbofan-Triebwerk nach Anspruch 3 oder 4, **dadurch gekennzeichnet, dass** das Verriegelungselement einen verstellbar gelagerten Verriegelungshaken (6) umfasst, der im bestimmungsgemäß verbundenen Zustand von Aufnahmekörper (1) und Abschlusselement (2) mit einem Steckzapfen (261) des Abschlusselements (2) formschlüssig verriegelt ist.

8. Turbofan-Triebwerk nach einem der vorhergehenden Ansprüche, **dadurch gekennzeichnet, dass** der Verriegelungsmechanismus (VM) manuell betätigbar ist, um eine Verriegelung zur Sicherung des Abschlusselements (2) an dem Aufnahmekörper (1) zu lösen.

9. Turbofan-Triebwerk nach den Ansprüchen 3 und 8, **dadurch gekennzeichnet, dass** das Verriegelungselement (3, 6) in einem von dem mit dem Aufnahmekörper (1) verbundenen Abschlusselement (2) definierten Innenraum (I) aufgenommen ist, der von mindestens einer Innenseite einer Seitenfläche (21a, 21b) das Verriegelungselements (3, 6) berandet wird, und der Verriegelungsmechanismus (VM) von einer Außenseite dieser Seitenfläche (21b) aus manuell betätigbar ist, um eine Verriegelung zur Sicherung des Abschlusselements (2) an dem Aufnahmekörper (1) zu lösen.

10. Turbofan-Triebwerk nach einem der vorhergehenden Ansprüche, **dadurch gekennzeichnet, dass** das Abschlusselement (2) entlang einer Anbringungsrichtung (E) an dem Aufnahmekörper (1) bestimmungsgemäß anbringbar ist und
(a) ein sich entlang der Anbringungsrichtung (E) längs erstreckender Abstandshalter (5) vorgesehen ist, an dem das Abschlusselement (2) im bestimmungsgemäß verbundenen Zustand von Aufnahmekörper (1) und Abschlusselement (2) mit einer quer zur Anbringungsrichtung (E) liegenden Ober- oder Unterseite anliegt, und/oder
(b) an dem Aufnahmekörper (1) wenigstens ein Leitmittel (12) vorgesehen ist, mittels dem dem Abschlusselement (2) bei seiner Anbringung an den Aufnahmekörper (1) bezüglich einer quer zur Anbringungsrichtung (E) verlaufenden Achse und/oder bezüglich einer radial zu einer Mittelachse (M) des Turbofan-Triebwerks (T) verlaufenden Achse eine bestimmungsgemäße Endlage vorgegeben wird.

11. Turbofan-Triebwerk nach Anspruch 10, **dadurch gekennzeichnet, dass** das Abschlusselement (2) wenigstens einen Abschnitt (25.1 - 25.4) umfasst, der bei der Anbringung des Abschlusselements (2) an dem Aufnahmekörper (1) an wenigstens einem Leitelement (121, 122) des wenigstens einen Leitmittels (12) entlang gleitet.

12. Turbofan-Triebwerk nach einem der vorhergehenden Ansprüche, **dadurch gekennzeichnet, dass** an dem Aufnahmekörper (1) ein in Richtung des Abschlusselements (2) vorstehender Vorsprung (100) vorgesehen ist, der Führungsabschnitte (101a, 101b) für die körperliche Führung des Abschlusselements (2) beim Anbringen des Abschlusselements (2) an dem Aufnahmekörper (1) aufweist.

13. Turbofan-Triebwerk nach einem der vorhergehenden Ansprüche, **dadurch gekennzeichnet, dass** an dem Aufnahmekörper (1) wenigstens ein Leitmittel (12) vorgesehen ist, an dem ein Abschnitt (25.1 - 25.4) des mit dem Aufnahmekörper (1) bestimmungsgemäß verbundenen Abschlusselements (2) formschlüssig und/oder kraftschlüssig gehalten ist.

14. Turbofan-Triebwerk nach Anspruch 11 oder 13, **dadurch gekennzeichnet, dass** der Abschnitt einen Befestigungsblock (25.1 - 25.4) umfasst, der eine Befestigungsstelle (BS1, BS2) für mindestens ein separates Befestigungselement (BE) definiert, mittels dem das Abschlusselement (2) an dem Aufnahmekörper (1) fixiert ist.

15. Turbofan-Triebwerk nach einem der vorhergehenden Ansprüche, **dadurch gekennzeichnet, dass** das Abschlusselement (2) mindestens ein Anschlagelement (251) aufweist, das bezüglich einer Anbringungsrichtung (E), entlang der das Abschlusselement (2) an dem Aufnahmekörper (1) bestimmungsgemäß anbringbar ist, eine Endlage des Abschlusselements (2) an dem Aufnahmekörpers (1) vorgibt, indem das Abschlusselement (2) über das mindestens eine Anschlagelement (251) an einem Abschnitt des Aufnahmekörpers (1) in Anbringungsrichtung (E) anschlägt und eine weitere Verlagerung des Abschlusselements (2) bezüglich des Aufnahmekörpers (1) in der Anbringungsrichtung (E) verhindert.

## Claims

1. Turbofan engine, with
- a core engine (K) and at least one fan (F) by means of which fluid is guided to a primary flow channel for the core engine (K) as well as to a secondary flow channel (BD) of the turbofan engine (T), wherein the secondary flow channel (BD) is provided for an outer fluid flow that leads past the core engine (K), and
- at least one cladding (VK) which is arranged inside the secondary flow channel (BD) and around which the fluid flow flows during operation of the turbofan engine (T), and by which at least one component (L1, L2) of the turbofan engine (T) that is guided radially through the secondary flow channel (BD) is at least partially cladded, and which has an end element (2) with a nose bar section that is facing towards the fluid flow and/or an end bar section (20) that is located in the flow direction (SR) of the fluid flow,
wherein the end element (2) with the nose bar sections and/or the end bar section (20) is a separate structural component that is connected in a releasable manner to a receiving body (1) of the cladding (VK) that is arranged in the secondary flow channel (BD) and that receives the at least one component (L1, L2),
**characterized in that**
the end element (2) can be plugged onto the receiving body (1) and that the end element (2) that is plugged onto the receiving body (1) is secured at the receiving body (1) without tools via a self-acting locking mechanism (VM).

2. Turbofan engine according to claim 1, **characterized in that** the fan (F), the core engine (K) and an outlet of the turbofan engine (T) are arranged along a central axis (M) behind each other and the end element (2) can be attached at the receiving body (1) according to the intended use along an axial direction with respect to this central axis (M).

3. Turbofan engine according to claim 1 or 2, **characterized in that** the locking mechanism (VM) comprises at least one locking element (3, 6) at the receiving body (1) which locks in a self-acting manner with an element (261) and/or section (21b) of the end element (2) when the end element (2) is plugged at the receiving body (1) according to the intended use.

4. Turbofan engine according to claim 3, **characterized in that** the locking element (3) of the receiving body (1) and/or the element (261) of the end element (2) is formed in an elastic manner and/or is spring-mounted.

5. Turbofan engine according to claim 3 or 4, **characterized in that** the locking element comprises an elastic spring plate (3) which, in a locked state of the locking mechanism (VM), meshes in a form-fit manner in a securing slot (22, 42) with at least one locking section (32a, 32b).

6. Turbofan engine according to claim 5, **characterized in that** the spring plate (3) has two locking sections (32a, 32b), of which a first locking section (32a) meshes in a first securing slot (42) of a holding member (4) that is provided at a first side surface (21a) of the end element (2) and a second locking section (32b) meshes in a second securing slot (22) at a second side surface (21b) of the end element (2) that is located opposite the first side surface (32a).

7. Turbofan engine according to claim 3 or 4, **characterized in that** the locking element comprises an adjustably mounted locking hook (6) that, in the connected state of the receiving body (1) and the end element (2) according to the intended use, is locked in a form-fit manner with the plug-in pin (261) of the end element (2).

8. Turbofan engine according to any of the preceding claims, **characterized in that** the locking mechanism (VM) can be actuated manually to release a locking for securing the end element (2) at the receiving body (1).

9. Turbofan engine according to claims 3 and 8, **characterized in that** the locking element (3, 6) is received inside an interior space (I) that is defined by the end element (2) that is connected to the receiving body (1) and that is bordered by at least one inner side of a side surface (21a, 21b) [of the] locking element (3, 6), and the locking mechanism (VM) can be manually actuated from an outer side of this side surface (21b) to release a locking for securing the end element (2) at the receiving body (1).

10. Turbofan engine according to any of the preceding claims, **characterized in that** the end element (2) can be attached at the receiving body (1) according to the intended use along an attachment direction (E) and
(a) a spacer (5) extending in the longitudinal direction along the attachment direction (E) is provided, at which, in the connected state of the receiving body (1) and the end element (2) according to the intended use, the end element (2) abuts with a top or bottom side that is positioned obliquely to the attachment direction (E), and/or
(b) at least one guiding means (12) is provided at the receiving body (1), by means of which an end position according to the intended use is predefined for the end element (2) with respect to an axis that extends obliquely to the attachment direction (E) and/or with respect to an axis that extends radially to a central axis (M) of the turbofan engine (T) when the end element (2) is attached at the receiving body (1).

11. Turbofan engine according to claim 10, **characterized in that** the end element (2) comprises at least one section (25.1 - 25.4) that glides along at least one guiding element (121, 122) of the at least one guiding means (12) when the end element (2) is attached at the receiving body (1).

12. Turbofan engine according to any of the preceding claims, **characterized in that** a projection (100) protruding in the direction of the end element (2) is provided at the receiving body (1), having guiding sections (101a, 101b) for physically guiding the end element (2) when the end element (2) is attached at the receiving body (1).

13. Turbofan engine according to any of the preceding claims, **characterized in that** at least one guiding means (12) is provided at the receiving body (1), with a section (25.1 - 25.4) of the end element (2) that is connected to the receiving body (1) according to the intended use being supported thereat in a form-fit and/or in a force-fit manner.

14. Turbofan engine according to claim 11 or 13, **characterized in that** the section comprises a mounting block (25.1 - 25.4) that defines an attachment location (BS1, BS2) for at least one separate attachment element (BE) by means of which the end element (2) is affixed at the receiving body (1).

15. Turbofan engine according to any of the preceding claims, **characterized in that** the end element (2) has at least one end stop element (251) that predefines an end position of the end element (2) at the receiving body (1) with respect to an attachment direction (E) along which the end element (2) can be attached at the receiving body (1) according to the intended use, which is achieved as the end element (2) abuts, via the at least one end stop element (251), at a section of the receiving body (1) in the attachment direction (E), and a further displacement of the end element (2) with respect to of the receiving body (1) in the attachment direction (E) is prevented.

## Revendications

1. Turboréacteur à double flux, comprenant
- un turboréacteur central (K) et au moins une soufflante (F), au moyen de laquelle du fluide est guidé à la fois à un conduit d'écoulement primaire pour le turboréacteur central (K) et à un conduit d'écoulement secondaire (BD) du turboréacteur à double flux (T), le conduit d'écoulement secondaire (BD) étant prévu pour un écoulement de fluide extérieur guidé devant le turboréacteur central (K) et
- au moins un habillage (VK) disposé dans le conduit d'écoulement secondaire (BD) et autour duquel circule l'écoulement de fluide pendant le fonctionnement du turboréacteur à double flux (T), lequel habille au moins en partie au moins un composant (L1, L2) du turboréacteur à double flux (T) guidé radialement à travers le conduit d'écoulement secondaire (BD) et lequel présente un élément de terminaison (2) avec une portion de bord d'attaque tournée vers l'écoulement de fluide et/ou une portion de bord de fuite (20) située dans la direction d'écoulement (SR) de l'écoulement de fluide,
l'élément de terminaison (2) avec la portion de bord d'attaque et/ou la portion de bord de fuite (20) étant un composant séparé qui est disposé dans le conduit d'écoulement secondaire (BD) et est connecté de manière amovible à un corps de réception (1) de l'habillage (VK) recevant l'au moins un composant (L1, L2),
**caractérisé en ce que**
l'élément de terminaison (2) peut être enfiché sur le corps de réception (1) et l'élément de terminaison (2) enfiché sur le corps de réception (1) est fixé sans outil au corps de réception (1) par le biais d'un mécanisme de verrouillage (VM) agissant automatiquement.

2. Turboréacteur à double flux selon la revendication 1, **caractérisé en ce que** la soufflante (F), le turboréacteur central (K) et une sortie du turboréacteur à double flux (T) sont disposés les uns derrière les autres le long d'un axe médian (M) et l'élément de terminaison (2) peut être monté le long d'une direction axiale par rapport à cet axe médian (M) sur le corps de réception (1) de manière conforme aux prescriptions.

3. Turboréacteur à double flux selon la revendication 1 ou 2, **caractérisé en ce que** le mécanisme de verrouillage (VM) comprend au moins un élément de verrouillage (3, 6) sur le corps de réception (1), qui se verrouille automatiquement avec un élément (261) et/ou une portion (21b) de l'élément de terminaison (2), lorsque l'élément de terminaison (2) est enfiché sur le corps de réception (1) de manière conforme aux prescriptions.

4. Turboréacteur à double flux selon la revendication 3, **caractérisé en ce que** l'élément de verrouillage (3) du corps de réception (1) et/ou l'élément (261) de l'élément de terminaison (2) est réalisé de manière élastique et/ou est monté sur ressort.

5. Turboréacteur à double flux selon la revendication 3 ou 4, **caractérisé en ce que** l'élément de verrouillage comprend une plaque de ressort élastique (3) qui s'engage dans un état verrouillé du mécanisme de verrouillage (VM) avec au moins une portion de verrouillage (32a, 32b) par engagement par correspondance de formes dans une fente de fixation (22, 42).

6. Turboréacteur à double flux selon la revendication 5, **caractérisé en ce que** la plaque de ressort (3) présente deux portions de verrouillage (32a, 32b) dont une première portion de verrouillage (32a) s'engage dans une première fente de fixation (42) d'une partie de fixation (4) qui est prévue au niveau d'une première surface latérale (21a) de l'élément de terminaison (2), et dont une deuxième portion de verrouillage (32b) s'engage dans une deuxième fente de fixation (22) au niveau d'une deuxième surface latérale (21b) de l'élément de terminaison (2) opposée à la première surface latérale (32a).

7. Turboréacteur à double flux selon la revendication 3 ou 4, **caractérisé en ce que** l'élément de verrouillage comprend un crochet de verrouillage (6) supporté de manière réglable, qui, dans l'état connecté de manière conforme aux prescriptions du corps de réception (1) et de l'élément de terminaison (2), est verrouillé par engagement par correspondance de formes avec un tourillon d'enfichage (261) de l'élément de terminaison (2).

8. Turboréacteur à double flux selon l'une quelconque des revendications précédentes, **caractérisé en ce que** le mécanisme de verrouillage (VM) peut être commandé manuellement, afin de desserrer un verrouillage pour la fixation de l'élément de terminaison (2) sur le corps de réception (1).

9. Turboréacteur à double flux selon les revendications 3 et 8, **caractérisé en ce que** l'élément de verrouillage (3, 6) est reçu dans un espace interne (I) défini par l'élément de terminaison (2) connecté au corps de réception (1), qui est bordé par au moins un côté intérieur d'une surface latérale (21a, 21b) de l'élément de verrouillage (3, 6), et le mécanisme de verrouillage (VM) peut être actionné manuellement à partir d'un côté extérieur de cette surface latérale (21b), afin de desserrer un verrouillage pour la fixation de l'élément de terminaison (2) au corps de réception (1).

10. Turboréacteur à double flux selon l'une quelconque des revendications précédentes, **caractérisé en ce que** l'élément de terminaison (2) peut être monté le long d'une direction de montage (E) sur le corps de réception (1) de manière conforme aux prescriptions et
(a) un élément d'espacement (5) s'étendant longitudinalement le long de la direction de montage (E) est prévu, au niveau duquel s'applique l'élément de terminaison (2), dans l'état connecté de manière conforme aux prescriptions du corps de réception (1) et de l'élément de terminaison (2), avec un côté supérieur ou un côté inférieur situé transversalement à la direction de montage (E), et/ou
(b) au moins un moyen de guidage (12) est prévu sur le corps de réception (1), au moyen duquel une position d'extrémité conforme aux prescriptions est prédéfinie pour l'élément de terminaison (2) lors de son montage sur le corps de réception (1) par rapport à un axe s'étendant transversalement à la direction de montage (E) et/ou par rapport à un axe s'étendant radialement par rapport à un axe médian (M) du turboréacteur à double flux (T) .

11. Turboréacteur à double flux selon la revendication 10, **caractérisé en ce que** l'élément de terminaison (2) comprend au moins une portion (25.1-25.4) qui glisse le long d'au moins un élément de guidage (121, 122) de l'au moins un moyen de guidage (12) lors du montage de l'élément de terminaison (2) sur le corps de réception (1).

12. Turboréacteur à double flux selon l'une quelconque des revendications précédentes, **caractérisé en ce qu'**une saillie (100) faisant saillie dans la direction de l'élément de terminaison (2) est prévue sur le corps de réception (1), laquelle présente des portions de guidage (101a, 101b) pour le guidage physique de l'élément de terminaison (2) lors du montage de l'élément de terminaison (2) sur le corps de réception (1).

13. Turboréacteur à double flux selon l'une quelconque des revendications précédentes, **caractérisé en ce qu'**au moins un moyen de guidage (12) est prévu sur le corps de réception (1), au niveau duquel une portion (25.1-25.4) de l'élément de terminaison (2) connecté au corps de réception (1) de manière conforme aux prescriptions est retenue par engagement par correspondance de formes et/ou par force.

14. Turboréacteur à double flux selon la revendication 11 ou 13, **caractérisé en ce que** la portion comprend un bloc de fixation (25.1-25.4) qui définit un point de fixation (BS1, BS2) pour au moins un élément de fixation séparé (BE) au moyen duquel l'élément de terminaison (2) est fixé sur le corps de réception (1).

15. Turboréacteur à double flux selon l'une quelconque des revendications précédentes, **caractérisé en ce que** l'élément de terminaison (2) présente au moins un élément de butée (251) qui, par rapport à une direction de montage (E) le long de laquelle l'élément de terminaison (2) peut être monté de manière conforme aux prescriptions sur le corps de réception (1), prédéfinit une position d'extrémité de l'élément de terminaison (2) sur le corps de réception (1), par le fait que l'élément de terminaison (2) bute contre une portion du corps de réception (1) dans la direction de montage (E) par le biais de l'au moins un élément de butée (251) et empêche un déplacement supplémentaire de l'élément de terminaison (2) par rapport au corps de réception (1) dans la direction de montage (E).
